# EUROPÄISCHE PATENTSCHRIFT

(11) **EP 1 661 074 B1**
(45) Veröffentlichungstag und Bekanntmachung des Hinweises auf die Patenterteilung: **23.07.2008**
(21) Anmeldenummer: 04761894.7
(22) Anmeldetag: 02.09.2004
(51) Int. Cl.: G06Q 10/00, G06F 15/02

(54) **VERFAHREN ZUR AKZEPTANZ VON EINRICHTUNGEN, EINE HIERZU VERWENDBARE ANORDNUNG SOWIE GERÄTSCHAFTEN**
METHOD FOR ACCEPTING DEVICES, AND ARRANGEMENT AND EQUIPMENT USED THEREFOR
PROCEDE DE RECEPTION DE DISPOSITIFS, DISPOSITIF UTILISABLE A CET EFFET, ET APPAREILS Y RELATIFS

(30) Priorität: 02.09.2003 EP 03405636
(43) Veröffentlichungstag der Anmeldung: 31.05.2006
(73) Patentinhaber: LIECHTI AG, CH-4566 Kriegstetten (CH)
(72) Erfinder: STEINMANN, Matthias, CH-3510 Konolfingen (CH)
(74) Vertreter: Rüfenacht, Philipp Michael
(86) Internationale Anmeldenummer: PCT/CH2004/000554
(87) Internationale Veröffentlichungsnummer: WO 2005/022421

(56) Entgegenhaltungen:
- EP-A- 0 408 348
- EP-A- 0 598 682
- EP-A- 1 085 440
- EP-A- 1 094 417
- US-A- 4 973 952
- PATENT ABSTRACTS OF JAPAN Bd. 2003, Nr. 01, 14. Januar 2003 (2003-01-14) & JP 2002 269508 A (SHARP CORP), 20. September 2002 (2002-09-20)
- WER HAT'S GESEHEN ? - WIE FORSCHER DIE PLAKATNUTZUNG MESSEN WOLLEN, [Online] 29. Juni 2004 (2004-06-29), Seiten 1-3, XP002306851 Zürich Gefunden im Internet: URL:http://www.nzz.ch/2004/06/29/hx/page-a rticle9OEME.html> [gefunden am 2004-11-22]
- ESOMAR EVENT PROGRAMME MEASUREMENT 2004, [Online] Seiten 1-10, XP002306852 Gefunden im Internet: URL:http://www.esomar.org/esomar/show/id-1 20262> [gefunden am 2004-11-22] & ESOMAR WORLDWIDE AUDIENCE MEASUREMENT 2004, 17. Juni 2004 (2004-06-17), XP002306964 GENEVA
- MEDIAWATCH BEGEISTERT AN WELTKONGRESS, [Online] XP002306944 Gefunden im Internet: URL:http://www.ihagfk.ch/gfk/EMN_Essenz/Ma rktforschung238.htm> [gefunden am 2004-11-22]

## Beschreibung

### Technisches Gebiet

Die Erfindung betrifft ein Verfahren zur Ermittlung einer Akzeptanz von Einrichtungen gemäss Patentanspruch 1, eine Anordnung zur Durchführung des Verfahrens gemäss Patentanspruch 13 sowie ein Personengerät gemäss Patentanspruch 14.

### Stand der Technik

Unter einer Akzeptanz, insbesondere einer zeitlichen Akzeptanz, wird verstanden, ob Einrichtungen auf einen Betrachter bzw. Benutzer einwirken, insbesondere wie lange sie auf ihn einwirken, d.h. wie lange eine Einrichtung, wie ein Plakat oder ein Schaufenster im Sichtbereich eines Betrachters ist oder wie lange sich ein Benutzer in einer Einrichtung, wie einem Restaurant, einer Abteilung eines Geschäfts oder in einem Verkehrsmittel aufhält. Diese Information ist ein Mass dafür, ob und wie stark die Einrichtung überhaupt auf den Benutzer wirkt, von ihm wahrgenommen wird, und ihn beispielsweise zu einem Kauf, einer Benutzung oder zur Betrachtung anregen bzw. auffordern kann.

Das Kaufverhalten z.B. versuchte man dadurch zu ermitteln, dass Kundenkarten ausgegeben wurden, welche bei einem Einkauf an der Kasse vorzuzeigen waren. Die eingekauften Waren wurden dann den Daten des Karteninhabers zugeordnet und in einem zentralen Rechner verarbeitet und abgespeichert. Hieraus sollten die Kaufgewohnheiten ermittelt werden. Man wollte hiermit z.B. eine Sortimentsoptimierung erreichen und/oder der betreffenden Person z.B. gezielt Reklame zukommen lassen. Ein einigermassen exaktes Kaufprofil liess sich jedoch nur bedingt erstellen, sofern auch immer die Kundenkarte präsentiert wurde.

Die EP 1 094 417 A2 (Papaioannou) betrifft eine Einrichtung zur ortsabhängigen Verbreitung von Information z. B. in Museen, Themenparks, Zoos etc.. Bei jeder Sehenswürdigkeit ist ein Sender/Empfänger fest platziert, welcher ein fest vorgegebenes Signal aussendet. Durch das Modulationsmuster kann jeder der festen Sender eindeutig identifiziert werden. Jeder Benutzer der Einrichtung trägt eine mobile Einheit mit sich, welche einen Sender/Empfänger, einen Speicher mit der wiederzugebenden Information und eine Tonwiedergabeeinheit, z. B. einen Kopfhörer, umfasst. Der Benutzer hat die Möglichkeit anzugeben, welche der Sehenswürdigkeiten ihn interessieren und welche nicht, so dass am Ende einer Tour ein Buch ausgedruckt werden kann, dessen Inhalt seinen Interessen entspricht. Zu diesem Zweck weist die mobile Einheit Tasten auf, und die eingegebenen Präferenzen werden (beispielsweise) im internen Speicher der Einheit abgelegt und am Ende der Tour zur Zentrale übertragen. Die Signalstärken der fest angeordneten Sender sind so gewählt, dass ein bestimmtes Modulationssignal nur in einem Bereich empfangen werden kann, in dem die jeweilige Sehenswürdigkeit betrachtet werden kann.

Die EP 1 085 440 A2 (NCR) betrifft ein Verfahren zur Gewinnung von personalisierter Information. Dazu trägt ein Benutzer ein Personengerät mit sich, welches Informationen über den Benutzerstandort aufnehmen kann. Das Personengerät kann am Körper getragen werden und umfasst einen Prozessor, einen Speicher, einen Zeitgeber sowie mindestens einen Sensor zum Aufnehmen von Umweltinformationen, beispielsweise Temperatur, Licht, Feuchtigkeit, Bewegung, Geräusche oder auch Funksignale. Die zu empfangenden Funksignale können von Funksendern stammen, welche vorgegebene Standorte (z. B. Geschäfte) identifizieren sollen, dazu umfassen die Signale einen Identifikationscode für den jeweiligen Standort. Die aufgenommenen und mit einer Zeit- bzw. Datumsinformation versehenen Informationen werden periodisch mit Hilfe eines PCs über ein Netzwerk an eine Einrichtung (personal data warehouse) übermittelt und dort mit in der Zentrale gespeicherten Umweltdaten korreliert, um die jeweiligen Standorte des Benutzers festzustellen. Neben den aufgenommenen Daten kann der Benutzer im Nachhinein zur Angabe von zusätzlichen Informationen zur Übermittlung an die zentrale Einrichtung aufgefordert werden, z. B. über besuchte Orte und Veranstaltungen. Die in der Einrichtung gespeicherten Benutzerdaten werden dazu verwendet, dem Benutzer künftig zu seinem Benutzerprofil oder aktuellen Standort passende Informationen und Dienstleistungen anzubieten.

Die US 4,973,952 (Information Resources) zeigt ein Anzeigesystem für Einkaufswagen, mit welchem abhängig vom jeweiligen Standort des Einkaufswagens dynamisch Werbeinhalte und Information auf einem am Einkaufswagen (oder einer Tragtasche oder einem Tragkorb) angebrachten Display dargestellt werden können. Dazu sind innerhalb des Ladens eine Reihe von Sendern an den Gestellen oder an der Decke angeordnet, welche jeweils ein eindeutiges elektromagnetisches Signal aussenden. Abhängig von den empfangenen Signalen wird im Display des Einkaufswagens eine Werbemitteilung angezeigt, welche der momentanen Position des Einkaufswagens angepasst ist. Die Sender sind derart ausgeführt und eingestellt, dass ihr Signal in einem bestimmten Bereich empfangen werden kann, wobei im Nahfeld gearbeitet wird, um eine deutliche Trennung zwischen Empfangs- und Nichtempfangsbereich zu erreichen. Zudem werden die empfangenen Signale zusammen mit Datums- und Zeitinformationen gespeichert und am Schluss an den zentralen Rechner übertragen. Diese Daten können ausgewertet werden, um zu erfahren, welche Wege die Kunden im Laden einschlagen, wo sie wie lange verweilen oder wie lange sie durchschnittlich im Laden bleiben. Die Werbemitteilungen und sonstige Informationen werden vorgängig von einem zentralen Computersystem an die Einkaufswagen-Geräte übermittelt und dort gespeichert. Die Geräte an den Einkaufswagen umfassen auch Eingabemittel, z. B. einen Touchscreen, welcher als Tastatur konfigurierbar ist, um beim Anstehen an der Kasse zu spielen oder auch um Umfragen im Frage-/Antwortstil bei den Kunden durchzuführen, wobei die Antworten im Gerät zwischengespeichert werden.

Die JP 2002 269508 (Sharp) betrifft die Verwendung von RFID-Etiketten mit einem Datenspeicher und einer Antenne, welche von einem RFID-Endgerät über Funk angesprochen werden können. Die Etikette wird beispielsweise an einem Plakat angebracht, und ein Benutzer kann mit seinem Endgerät die in der Marke gespeicherte Information auslesen oder verändern, beispielsweise um an einem Wettbewerb teilzunehmen. Das Endgerät des Benutzers ist mobil und ähnelt optisch einer Armbanduhr. Zu Hause kann die Information auf dem Endgerät an einen PC übermittelt werden.

Die EP 0 408 348 A2 (Lee S. Weinblatt) betrifft eine Vorrichtung und ein Verfahren zur Akzeptanzmessung von Printmedien, Radio und Fernsehen und zur Korrelation der Messungen mit Einkäufen, die vom Benutzer getätigt werden. Für die Akzeptanzmessungen von Radioprogrammen und Printmedien sind bevorzugt tragbare Vorrichtungen, z. B. in der Form von Armbanduhren, vorgesehen, und auch die Vorrichtung zur Akzeptanzmessung von Fernsehprogrammen (insbesondere von Werbespots) kann gleichartig ausgebildet sein. Die Vorrichtungen umfassen Mikrofone zur Aufnahme von speziellen mit dem Radio- oder TV-Programm ausgestrahlten Signalen. Die Informationen über die Detektion solcher Signale werden in einem internen Gerätespeicher abgelegt. Die Empfindlichkeit des Mikrofons ist derart gewählt, dass nur Signale empfangen werden, welche aus einem Aufmerksamkeitsbereich des Trägers herrühren. Die Vorrichtung zur Akzeptanzmessung von Fernsehsignalen kann auch Signale empfangen, welche von einer an den Fernsehtuner angeschlossenen Einheit gerichtet ausgestrahlt werden, und welche nur dann empfangen werden, wenn der Kopf des Zuschauers zum Fernseher hin gerichtet ist. Die Akzeptanz von Printmedien wird dadurch erfasst, dass die tragbare Vorrichtung ein Aktivierungssignal aussendet, worauf eine im Medium vorhandene passive Sendeeinheit ein spezifisches Signal zurücksendet. Dieses wird von der tragbaren Vorrichtung empfangen, so dass die entsprechende Information über das gelesene Medium im Gerätespeicher abgelegt werden kann. Die Sendeleistung und die Empfangsempfindlichkeit der Vorrichtung sind so gewählt, dass tatsächlich nur Signale von gerade gelesenen Printmedien erfasst werden.
Auch aus dem nach dem Prioritätsdatum der vorliegenden Anmeldung erschienenen Artikel "Wer hat's gesehen?" (Neue Zürcher Zeitung vom 29. Juni 2004) geht ein Gerät hervor, mit welchem neben der Erfassung der Radio- und TV-Nutzung auch die Nutzung von Printmedien messbar ist, wobei die entsprechenden Informationen durch Eingaben des Benutzers erhoben werden. Ansonsten bezieht sich der Artikel auf die Akzeptanzmessungen von Plakatstellen.

### Darstellung der Erfindung

### Aufgabe

Aufgabe der Erfindung ist es, ein verbessertes Verfahren sowie hierzu verwendbare Gerätschaften zu schaffen, welche es gestatten, eine Akzeptanz von Einrichtungen und somit deren Wirkung auf unbeteiligte sowie mit ihnen sich beschäftigenden, eventuell sie benützenden Personen zu ermitteln.

### Lösung

Die Lösung der Aufgabe erfolgt verfahrensmässig durch die Merkmale des Patentanspruchs 1. Vorrichtungsmässig wird die Aufgabe durch die in Patentanspruch 13 definierte Anordnung gelöst, welche u.a. ein in Patentanspruch 14 definiertes Personengerät und eine Sendereinheit hat.

Erfindungsgemäss wird eine Akzeptanz von auf Personen wirkenden Einrichtungen damit ermittelt, dass von jeder dieser Einrichtungen her ein elektromagnetisches Identifizierungssignal mit einer vorgegebenen Reichweite ausgesandt wird. Dies erfolgt dadurch, dass an jeder Einrichtung eine Sendereinheit angeordnet ist, welche das elektromagnetische Signal aussenden kann. Der Sendebereich, welcher durch die Sendeleistung und die verwendete Antenne bestimmt ist, wird so eingestellt bzw. ausgewählt, dass unter den gegebenen Umweltbedingungen beim Standort der Einrichtung die vorgegebene Reichweite erzielt wird. Die Einstellung der Sendeleistung kann beispielsweise auf vorher durchgeführten Modellrechnungen basieren oder aber auf einer einmal bei der Installation der Sendeeinrichtung vorgenommenen Kalibrierung. Der momentane Dateninhalt des Identifizierungssignals wird von einem von einer Person getragenen Personengerät empfangen, sofern sich die Person innerhalb eines durch die jeweilige Reichweite definierten Sendebereichs befindet. Der Dateninhalt wird ferner in einem Gerätespeicher des Personengeräts abgespeichert. Der Sendebereich und eine Empfangsempfindlichkeit des Personengeräts sind derart aufeinander abgestimmt, dass kein Datenempfang möglich ist, sofern sich die Einrichtung bezogen auf das von der Person getragene Personengerät ausserhalb eines typischen menschlichen Aufmerksamkeits- bzw. Wahrnehmungsbereichs befindet.

Im Personengerät wird mittels eines Zeitgebers eine Datenmenge in einem Gerätespeicher reduziert und/oder eine zeitliche Zuordnung vorgenommen und/oder ermittelt, wie oft und/oder wie lange die das Personengerät tragende Person sich innerhalb des betreffenden Sendebereichs der Einrichtung aufgehalten hat. Im Rahmen des erfindungsgemässen Verfahrens wird nun der Zeitgeber in einer Taktfolge durch ein Einrichtungssignal zeitlich umgeschaltet, so dass eine Taktfrequenz zum Empfangen und Abspeichern des Dateninhalts geändert wird, um diese auf typische Verweildauern der das Personengerät tragenden Person im Sendebereich der jeweiligen Einrichtung einzustellen. Werden die Daten beispielsweise mit einer bestimmten Taktzeit aufgenommen, ist eine Datenkomprimierung möglich. Es gibt nun unterschiedlich lange typische Beobachtungs- oder Verweildauern. Vor einem Schaufenster zum Beispiel dürfte eine Verweilzeit von einer Minute schon lang sein. In einem Omnibus ist die Aufenthaltsdauer schon bedeutend länger, in einem Kino oder einem Restaurant noch länger. Um nun eine vernünftige Angabe über eine auf eine Person einwirkende Einrichtung zu ermitteln, ist die zum Abspeichern verwendete Taktzeit variabel gestaltet. Einrichtungen, welche eine kurze "Einwirkungszeit" benötigen, sollten somit eine höhere Taktfrequenz (kürzere Zeit zwischen den einzelnen Messungen) erzwingen; aufenthaltsspezifische Einrichtungen dann eine tiefere Taktfrequenz (eine längere Zeit zwischen den Messungen). Mit dem vom Sender der Einrichtung abgestrahlten Signal kann somit ein Code für eine entsprechende Taktzeit ausgesandt werden, der dann den Taktgeber im Personengerät entsprechend umschaltet.

Unter einem menschlichen Aufmerksamkeits- bzw. Wahrnehmungsbereich einer Einrichtung wird der Bereich verstanden, in dem sich eine Person befinden kann, um die typischen Eigenheiten einer Einrichtung aufzunehmen, zu erkennen, Teile der Einrichtung zu verwenden bzw. zu bearbeiten. Einige nachfolgende Beispiele sollen diesen Begriff verdeutlichen. Der Aufmerksamkeits- bzw. Wahrnehmungsbereich eines Schaufensters ist beispielsweise die Sichtweite, in der ausgestellte Gegenstände und deren Kennzeichnungen (z.B. Preisschilder) noch erkennbar sind. In der Regel ist hier ein Abstand von ein bis drei Metern von der Schaufensterscheibe gemeint. Handelt es sich um eine Anzeige an einer Litfasssäule wird man von einer Distanz von ein bis zwei Metern ausgehen. Sollen die Benutzungsgewohnheiten in öffentlichen Verkehrsmitteln festgestellt werden, ist der Aufmerksamkeits- bzw. Wahrnehmungsbereich auf das Fahrzeuginnere beschränkt. Wird ein Automat betätigt, so wird dessen Berührung gefordert. Es können aber auch grössere Reichweiten von etwa 25 Meter für Fussgänger und von etwa 50 Meter für sich in Fahrzeugen bewegende Personen gewählt werden.

Eine Akzeptanzermittlung unter Mitwirkung von Personen kann in deren Privatsphäre eingreifen, welche zu schützen ist. Die abgespeicherten Daten müssen für eine nachfolgende Auswertung auslesbar sein. Damit sie jedoch nicht von jedermann interpretierbar sind, wird man sie chiffrieren. Eine einfache Art der Chiffrierung, welche zudem auch noch Speicherplatz einspart, ergibt sich dadurch, dass die Signale aus einem räumlichen Überwachungsbereich, der mehrere Einrichtungen enthält, während eines vorgegebenen Zeitraums in einer Zentrale als Zeitraumeinrichtungssignale abgespeichert werden. Die in jedem Gerätespeicher des Personengeräts über den Zeitraum gespeicherten Dateninhalte der Identifizierungssignale werden später zur Zentrale übertragen und zur Koinzidenzbildung mit den dort gespeicherten Zeitraumsignalen ausgelesen, d. h. die übertragenen Signale werden mit mehreren Zeitabschnitten der verschiedenen in der Zentrale gespeicherten Zeitraumsignalen korreliert, bis sich eine maximale Koinzidenz ergibt. Daraus lässt sich einerseits das vom Personengerät empfangene Signal eruieren, andererseits der Zeitpunkt des Empfangs. Die ermittelten Koinzidenzen können anschliessend verarbeitet werden, indem beispielsweise zunächst die individuellen Koinzidenzen zu Informationen über das Nutzungsverhalten verarbeitet werden, d.h. bestimmt wird, wann und wie lange der Benutzer welche Einrichtungen oder Medien nutzt. Als nächster Schritt kann eine statistische Auswertung der Informationen über eine Vielzahl von Nutzern erfolgen, um z.B. die Einschaltquote einer Fernsehsendung zu bestimmen.

Weitere Arten der Verschlüsselung sind in der Detailbeschreibung angeführt.

Um Fehlinterpretationen zu vermeiden, können auch Umgebungsinformationen mit aufgezeichnet werden. Als Umgebungsinformationen können Geräusche, Lichtstärken, Umgebungstemperaturen etc. dienen.

Es könnten nun lediglich die von der jeweiligen Einrichtung ausgesandten Dateninhalte deren Identifizierungssignale abgespeichert werden. Die jeweilige Einrichtung kann jedoch neben ihrem Identifizierungssignal auch noch einen Fragenkatalog mit ein oder mehreren Fragen aussenden, die dann über Eingabemittel am Personengerät beantwortet werden. Der Fragenkatalog kann auch im Personengerät abgelegt sein. Die eingegebenen Antworten werden in den Gerätespeicher des Personengeräts eingespeichert. Im Identifizierungssignal kann jedoch auch die genaue Ortsbezeichnung der betreffenden Einrichtung enthalten sein.

Der Fragenkatalog kann, sofern er nicht automatisch übermittelt wird, den Ort einer Nutzung eines Mediums, insbesondere des Radios, des Fernsehens oder eines Printmediums betreffen. In diesem Fall wird dem Benutzer bevorzugt eine Auswahl verschiedener Orte angeboten, z.B. "zu Hause", "im Auto", "im Büro", "im Restaurant" etc., aus denen er den gegenwärtigen Ort auswählen kann. Um die Auswahl einfacher zu gestalten, können den verschiedenen Orten unterschiedliche Symbole (z.B. ein Haus, ein Auto, ein Schreibtisch, Messer und Gabel etc.) zugeordnet sein. Die Auswahl kann im einfachsten Fall durch wiederholtes Drücken einer einzigen Taste erfolgen.

Die durch die Eingabemittel am Personengerät erfasste Information kann auch den Zeitpunkt und/oder die Dauer der Nutzung eines Printmediums, also einer Zeitung, eines Magazins, einer Illustrierten oder auch eines Buchs, betreffen. In diesem Fall wählt der Benutzer, wiederum bevorzugt aus einer Auswahl, die Art, den Titel und/oder die Ausgabe des Mediums aus, bevor er mit dessen Lektüre beginnt. Auf diese Weise werden das benutzte Medium und der Zeitpunkt der Benutzung bestimmt. Am Ende der Lektüre betätigt der Benutzer wiederum eines der Eingabemittel, so dass auch die Dauer der Benutzung bestimmt werden kann.

Der Fragenkatalog kann ausserdem qualitative Angaben über die Nutzung des Mediums oder einer der Einrichtungen betreffen, also beispielsweise die Zufriedenheit nach dem Besuch eines Restaurants, eines Geschäfts oder eines Kinos, spezifische Fragen zum Inhalt von Printmedien oder von Radio- oder Fernsehsendungen, die Zufriedenheit mit dem Musikprogramm etc.

In jedem Fall kann die Beantwortung des Fragenkatalogs durch Betätigen der Eingabemittel unabhängig von und gleichzeitig mit dem Empfang und dem Einspeichern des elektromagnetischen Identifizierungssignals erfolgen, d.h. der Benutzer kann den Eingabeprozess auch dann ungehindert weiterführen, wenn das Personengerät ein Signal empfängt und/oder verarbeitet. Zu diesem Zweck ist das Personengerät so ausgebildet, dass es gleichzeitig die Eingabemittel abfragen, die daraus gewonnene Information verarbeiten und das elektromagnetische Signal empfangen und verarbeiten kann. Gleichzeitig kann gegebenenfalls auch eine Anzeige am Personengerät aktualisiert werden.

Es können jedoch auch Eingabemittel vorhanden sein, welche zusätzliche Signale empfangen. Zusätzliche Signale können Umgebungssignale sein, z.B. akustische Umgebungsinformationen. Insbesondere können ein Radioprogramm oder eine Tonspur eines Fernsehprogramms (bzw. kurze Ausschnitte daraus) empfangen und im Gerätespeicher abgespeichert werden, gegebenenfalls nach einer Chiffrierung, Codierung und/oder Komprimierung der empfangenen Signale. Der Empfang und die Abspeicherung der Umgebungssignale erfolgt unabhängig vom Empfang des Dateninhalts der elektromagnetischen Identifizierungssignale, und die Verarbeitung beider Signaltypen kann gleichzeitig erfolgen. Auch die Umgebungsinformationen können in einer Zentrale als Zeitraumeinrichtungssignale abgespeichert werden, so dass später eine Koinzidenzbildung mit den zunächst im Personengerät gespeicherten und später zur Zentrale übertragenen Umgebungsinformationen stattfinden kann.

Aus der Koinzidenzbildung mit den abgespeicherten Umgebungsinformationen können verschiedene Informationen ermittelt werden. So können Geräusche, die Helligkeit oder Temperatur auf den Ort einer Nutzung (drinnen, draussen, zu Hause, in der Öffentlichkeit etc.) schliessen lassen.

Werden gleichzeitig unterschiedliche Informationen, d.h. der Dateninhalt des Identifizierungssignals, Informationen von den Eingabemitteln sowie Umgebungsinformationen, gewonnen und zusammen abgespeichert, so können gleichzeitig verschiedene Aspekte der Nutzung von Medien oder Einrichtungen bestimmt werden, insbesondere Orte, Zeitpunkte, Benutzungsdauern oder qualitative Angaben. Auch die Tatsache, dass mehrere Einrichtungen, mehrere Medien oder Medien und Einrichtungen gleichzeitig genutzt werden, wird offenbar. Bei Einrichtungen werden beispielsweise der Ort und die zeitlichen Informationen mittels der Identifizierungssignale erfasst, während die qualitativen Informationen durch manuelle Eingaben am Personengerät erfasst werden. Beim Radio oder Fernsehen erfolgt die Bestimmung des Senders, des Zeitpunkts und der Dauer durch akustische Umgebungsinformationen, während die Ortsbestimmung durch Identifizierungssignale von nahen Einrichtungen und/oder manuellen Eingaben und/oder Umgebungsinformationen erfolgt. Bei Printmedien wiederum erfolgt die Bestimmung von zeitlichen Angaben z.B. durch manuelle Eingaben des Nutzers, während die Ortsbestimmung je nach Verfügbarkeit wieder durch Identifizierungssignale von nahen Einrichtungen und/oder manuellen Eingaben und/oder Umgebungsinformationen erfolgt. Natürlich kann bei gewissen Einrichtungen oder Medien auf die Erhebung von einigen der Informationen verzichtet werden. Die verschiedenen erfassbaren Informationen können überdies subsidiär erfasst werden, d.h. für die Ortsbestimmung wird zuerst versucht, ein Identifizierungssignal einer nahen Einrichtung zu empfangen. Gelingt dies nicht, werden die Umgebungsinformationen (akustisch, Temperatur, Helligkeit) erfasst und gespeichert. Zusätzlich (oder in gewissen Fällen) kann der Benutzer zur manuellen Eingabe weiterer Informationen aufgefordert werden.

Das erfindungsgemässe Verfahren und die entsprechenden Vorrichtungen erlauben somit die gleichzeitige Erfassung verschiedener Medien und Einrichtungen durch ein einziges Gerät, welches von einer Person getragen wird. Die Daten werden in Echtzeit erfasst, und die Auswertung kann im Prinzip unmittelbar nach der Erfassung der Daten erfolgen.

Neben den akustischen Umgebungsinformationen, der Temperatur und der Helligkeit, können aber auch noch ein zweites Signal oder mehrere Signale neben dem Dateninhalt des Identifizierungssignals empfangen werden. Ausführungsbeispiele hierzu finden sich in der Detailbeschreibung.

Jede Einrichtung kann nun von sich aus Signale aussenden. Das Personengerät kann jedoch auch eine Einrichtung initiieren, um Signale auszusenden. Ein derartiges Verfahren wird man hauptsächlich dann anwenden, wenn bei der Einrichtung Energie gespart werden soll. In der Regel wäre es vorteilhafter, wenn das Personengerät einen Initiierungsimpuls aussenden würde; viele Personen haben jedoch eine Abneigung, ein Personengerät zu tragen, welches öfter elektromagnetische Strahlung abstrahlt.

Eine Durchführung einer Akzeptanzbestimmung von voneinander distanzierten Einrichtungen in einem Überwachungsbereich, der ein Stadtviertel, ein Dorf oder eine ganze Stadt sein kann, wird erfindungsgemäss mit einer Anordnung erreicht, welche im Überwachungsbereich mehrere Einrichtungen mit Sendereinheiten hat und mehrere Personen je ein Personengerät mit Gerätespeicher zur Datenabspeicherung tragen. Die Sendereinheiten und die Personengeräte weisen die bereits oben angetönten Eigenschaften auf.

Eine Anordnung bestehend aus mehreren Personengeräten und wenigstens einem Sender an jeder der Einrichtungen ist betriebsbereit. Die Sender sind derart ausgebildet, dass sie ein die betreffende Einrichtung kennzeichnendes Signal aussenden, welches sich auch zeitlich ändern kann. Vorzugsweise wird man jedoch in einer Anordnung noch eine zusätzliche Zentrale verwenden. Diese Zentrale hat einen zentralen Speicher, in dem die Datensätze der von den Einrichtungen abgestrahlten Signale bzw. deren Dateninhalt über einen vorgegebenen Zeitraum abspeicherbar sind. Ferner hat die Zentrale eine Leseeinheit, mit der der Gerätespeicher auslesbar ist, sowie eine Korrelationseinheit, mit der die ausgelesenen Datensignale des Gerätespeichers mit den Datensätzen des zentralen Speichers in einer Koinzidenzroutine ermittel- und auswertbar sind. Die Verwendung einer Zentrale ermöglicht eine Datenkomprimierung und damit eine Sicherheit gegen unbefugtes Auslesen des im Personengerät abgespeicherten Dateninhalts. Es ist eine Verschlüsselung (Chiffrierung) der Dateninhalte möglich.

Es kann nun eine Zentrale vorhanden sein, welche eine Reihe von Personengeräten auswertet. Die betreffenden Personengeräte werden dann zum Auslesen zur Zentrale gebracht. Es können aber auch mehrere stationäre Zentralen vorhanden sein, z.B. in jedem Haushalt, der wenigstens eine Person hat, die ein Personengerät trägt. Diese. "Hausstation" ("Dockingstation") kann dann beispielsweise die Daten aus dem Personengerät auslesen und z.B. über das Telefonnetz an eine zentrale Einheit übermitteln.

Die Sender bzw. die derart ausgewählten Einrichtungen befinden sich an unterschiedlichen Orten eines Überwachungsbereiches. Werden Personengruppen nach besonderen Eigenschaften ausgewählt oder soll nur eine Akzeptanz über einen Bevölkerungsquerschnitt festgestellt werden, kann aus den in den Personengeräten abgespeicherten Daten ermittelt werden, wie oft und wie lange bestimmte Einrichtungen aufgesucht, betrachtet oder benützt worden sind. Man hat hiermit ein Mittel in der Hand, um festzustellen, wie u.a. Werbung ankommt, wie häufig und zwischen welchen Haltestellen öffentliche Verkehrsmittel benützt werden; auch lässt sich beispielsweise feststellen, was als Blickfang in Schaufenstern oder bei Plakatwänden wirkt.

Das Personengerät trägt die jeweilige Person. Vorzugsweise wird man das Gerät, damit es nicht allzu sehr auffällt und der Person auch noch Nutzen bringt, als Armbanduhr ausbilden. Trägt nun die betreffende Person statt einem einzigen Personengerät an jedem Arm ein Personengerät, kann aufgrund von Interferenzmessungen festgestellt werden, wie die Person zur Einrichtung steht. Steht sie z.B. mit dem Rücken hierzu, ist wohl ein visueller Reiz bzw. eine Werbungsaufnahme auszuschliessen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen
- Fig. 1: eine schematische Darstellung einer Ausführungsvariante einer Anordnung zur zeitlichen Verhaltensermittlung von Personen;
- Fig. 2: eine schematische Darstellung des Zusammenhangs von Aufmerksamkeits-bzw. Wahrnehmungsbereich, Sendebereich und Empfangsbereich;
- Fig. 3: ein Ausführungsbeispiel eines Personengeräts;
- Fig. 4: ein Blockdiagramm eines weiteren Ausführungsbeispiels eines Personengeräts;
- Fig. 5: eine Aussenansicht des Personengeräts;
- Fig. 6A-M: verschiedene Ansichten der Anzeige des Personengeräts während der Erfassung der Nutzung von Printmedien;
- Fig. 7: die Anzeige des Personengeräts bei der Erfassung des Ortes einer Nutzung; und
- Fig. 8: die Anzeige des Personengeräts nach dem Ende des Erfassungszeitraums für eine Person.

Grundsätzlich sind in den Figuren gleiche Teile und Elemente mit gleichen Bezugszeichen versehen.

### Wege zur Ausführung der Erfindung

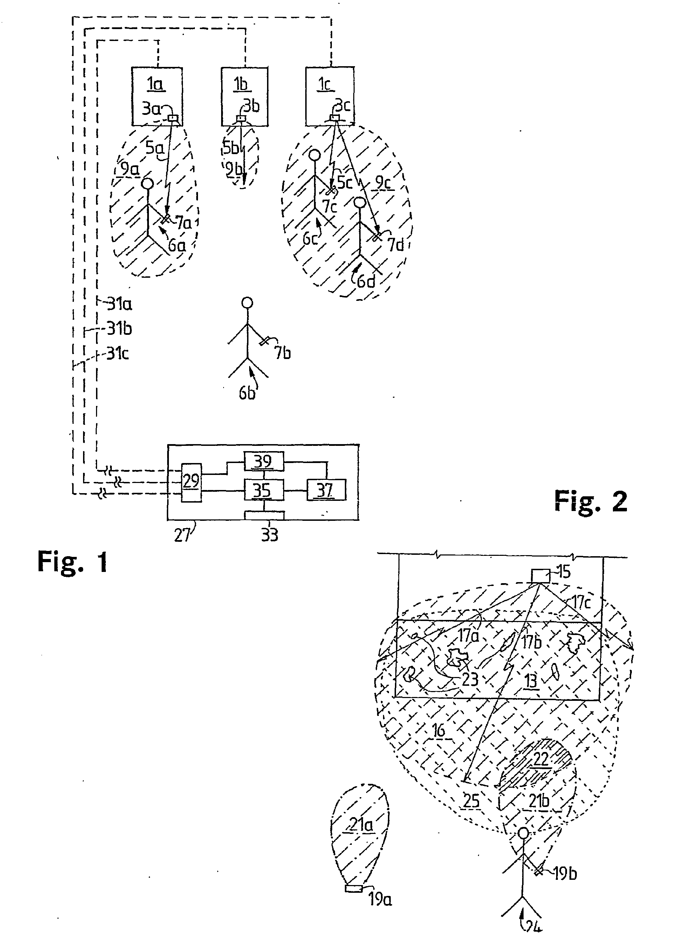

Das in **Figur 1** dargestellte Ausführungsbeispiel einer erfindungsgemässen Anordnung dient zur Ermittlung einer zeitlichen Akzeptanz von örtlich voneinander distanzierten Einrichtungen **1a** bis **1c.** Einrichtungen können Schaufenster, Plakate, Kinos, Geschäfte, Museen, Strassenbahn- und Busstationen usw. sein. Wobei deren Akzeptanz bei der Bevölkerung ermittelt werden soll.

Unter einer Akzeptanz wird z.B. verstanden, welche Bevölkerungsschichten sehen sich welche Schaufenster mit welchem Inhalt an. Welche Bevölkerungsschichten gehen wann ins Kino und sehen sich welche Filme an. Welche Museen werden besucht und was wird angesehen. Welche Busse, Strassenbahnen werden von wo bis wo und wann benützt.

An jeder Einheit **1a** bis **1c,** deren Akzeptanz ermittelt werden soll, ist wenigstens eine Sendereinheit **3a** bis **3c** angeordnet. Von der Sendereinheit **3a** bis **3c** wird ein elektromagnetisches, diese Einrichtung identifizierendes Identifizierungssignal **5a** bis **5c** mit einer durch die entsprechende Sendeleistung vorgegebenen, in der Regel kurzen Reichweite ausgesendet. Jede Sendereinheit **3a** bis **3c** hat eine eindeutige Seriennummer, welche durch einen 32-bit-Code gebildet wird. Dies erlaubt die Unterscheidung von mehr als 4 Milliarden Einheiten. Jede Sendereinheit übermittelt zudem einen 8-Bit-Code, welcher zur Übermittlung weiterer einrichtungsspezifischer Informationen verwendet werden kann. Beispielsweise können in einem Kino unterschiedliche Codes für die Werbung, für Vorfilme und für den Hauptfilm ausgesendet werden, so dass später bei der Auswertung gezielt zwischen diesen Programmteilen unterschieden werden kann. Die Sendereinheiten **3a** bis **3c** senden ihre sie identifizierenden Seriennummern, alle zu jeweils vorgegebenen Zeiten aus (burst).

Jedes dieser Identifizierungssignale **5a** bis **5c** kann von einem Empfänger eines von einer Person **6a** bis **6d** zu tragenden Personengeräts **7a** bis **7d** empfangen werden, sofern sich die Person bzw. deren Personengerät im Sendebereich **9a, 9b** bzw. **9c** einer der Sendereinheiten **3a** bis **3c** befindet. In **Figur 1** befindet sich die Person **6a** mit ihrem Personengerät **7a** im Sendebereich **9a** und die beiden Personen **6c** und **6d** mit ihren Personengeräten **7c** bzw. **7d** im Sendebereich **9c.** Die Person **6b** mit ihrem Personengerät **7b** befindet sich in keinem Sendebereich.

Die Reichweite jeder Sendereinheit sowie die Empfindlichkeit der jeweiligen Empfänger der Personengeräte sind aufeinander derart abgestimmt, dass kein Datenempfang möglich ist, sofern sich die Einrichtung bezogen auf das von der Person getragene Personengerät ausserhalb eines typischen menschlichen Aufmerksamkeits- bzw. Wahrnehmungsbereichs befindet. Dieser Sachverhalt ist in **Figur 2** erläutert. In **Figur 2** ist schematisch als Einrichtung ein Schaufenster **13** analog zu den Einrichtungen **1a** bis **1d** dargestellt. Hinter dem Schaufenster **13** ist eine zu den Sendereinheiten **3a** bis **3c** analog ausgebildete Sendereinheit **15** angeordnet. Die Sendereinheit **15** strahlt elektromagnetische Identifizierungssignale in einen keulenartigen, zu den Sendebereichen **9a** bis **9c** analogen Sendebereich **16** ab. Im Sendebereich **16** sind somit die Reichweiten **17a** bis **17c** je nach Ausstrahlungsrichtung unterschiedlich. Jeder zu den Empfängern analog ausgebildete Empfänger **19a** und **19b** hat nun einen durch seine Empfindlichkeit definierten räumliche Empfangsbereich, wobei ein Empfang von Identifizierungssignalen immer dann gegeben ist, wenn Empfangs- und Sendebereich eine gemeinsame Fläche, hier die Überlappungsfläche **22,** einschliessen. In **Figur 2** sind die beiden Empfangsbereiche **21a** und **21b** der beiden Empfänger **19a** und **19b** dargestellt.

Um beispielsweise in einem Schaufenster **13** die Auslagen **23** erkennen und beurteilen zu können, muss die betrachtende Person, hier die Person **24,** so nahe herantreten, dass dies auch möglich ist. Der Bereich, in dem die Person bei dieser Entfernung alles erkennen und beurteilen kann, wird als menschlicher Aufmerksamkeits- bzw. Wahrnehmungsbereich definiert. Der Sendebereich **16** und die Empfangsempfindlichkeit **21b** werden nun derart aufeinander abgestimmt, dass das zu betrachtende Gut, hier die Auslagen **23,** innerhalb des Aufmerksamkeits- bzw. Wahrnehmungsbereichs 25 liegen. Der Sendebereich **16,** wie unten ausgeführt, muss nicht unbedingt von der jeweiligen Einrichtung ausgehen. Die Einrichtung kann auch Empfänger sein. Analoges gilt für die Empfangsempfindlichkeit.

Der Bereich **25** ist individuell verschieden. Man kann aber davon ausgehen, dass kurzsichtige Person sowie auch weitsichtige eine sichtweitekorrigierende Brille tragen werden; man wird deshalb zur Vereinfachung mit einem typischen menschlichen Aufmerksamkeits- bzw. Wahrnehmungsbereich arbeiten. Falls erforderlich, kann jedoch der Empfänger **19a** bzw. **19b** auch individuell auf die Sehschärfe oder falls es sich auf Hörsignale bezieht, auf die individuelle Hörempfindung abgestimmt werden.

Die in einem unten angeführten Gerätespeicher **55** abgespeicherten unterschiedlichen Datensätze von Identifizierungssignalen werden später ausgelesen, um zu erfahren, an was die betreffende Person Interesse hatte. Eine derartige Auswertung über einen repräsentanten Bevölkerungsquerschnitt oder lediglich über sehr viele Personen eines Ortes ergibt Auskunft zu den verschiedensten Fragen, wobei anschliessend nur eine kleine Auswahl aufgelistet ist:
➢ Welche Werbemittel sind die geeignetsten, wo sind sie anzubringen, was ist darzustellen.
➢ Welche Strassen und Wege werden wie häufig benützt, welche Strassenseiten werden benützt.
➢ Welche Verbindungen von öffentlichen Verkehrsmitteln werden wann und wie oft benützt.
➢ Welche Schaufenster, Geschäfte, Lokale usw. werden wann und wie oft aufgesucht.

Die oben beschriebene Anordnung aus Personengeräten **7a** bis **7d** und Sendern **3a** bis **3c** ist betriebsbereit. Vorzugsweise wird man jedoch der Anlage eine Zentrale **27** mit einem zentralen Speicher **29** zuordnen, was jedoch keineswegs zwingend ist. Der zentrale Speicher **29** ist mit den Sendereinheiten **3a** bis **3c** der Einheiten **1a** bis **1c** signalmässig verbunden. Die Verbindung kann über Leitungen **31a** bis **31c** (z.B. Telefonnetz), wie in **Figur 1** gezeigt, erfolgen. Sie kann aber auch funktechnisch erfolgen. Ein Versenden von Datenträgern an die Zentrale **27** ist ebenfalls möglich. Die Zentrale **27** hat ferner eine Leseeinheit **33,** mit der der Gerätespeicher **26** jedes Personengerätes **7a** bis **7d** über eine Schnittstelle **38** auslesbar ist sowie eine Korrelationseinheit **35,** mit der die ausgelesenen Datensignale des Gerätespeichers mit den Datensätzen des zentralen Speichers **29** in einer Koinzidenzroutine ermittel- und in einer Auswerteeinheit **37** auswertbar sind.

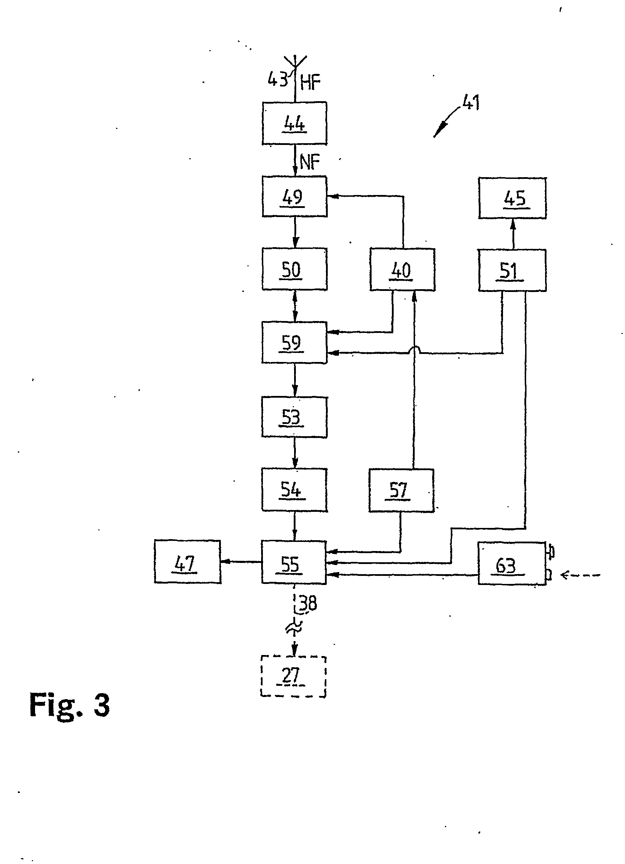

Das Personengerät **41 (****Figur 3****)** wird zur Reduzierung der Datenmenge mit dem Signal eines Taktgebers **40** getaktet betrieben und die Daten werden komprimiert. Die Datenkomprimierung dient zusätzlich dem Datenschutz der das Gerät tragenden Person. Ein Auslesen der Daten durch Unbefugte ist nahezu unmöglich. Aus der Anzahl aufgenommener Signalpakete ist dann ohne Weiteres erkennbar, wie lange sich die betreffende Person in einem Sendebereich einer Einrichtung aufgehalten hat. Die Verwendung eines für alle Personengeräte gleichen Taktes erlaubt zudem eine genauere und einfachere Koinzidenzbildung in der Zentrale unter Verwendung eines im gleichen Takt laufenden dortigen Taktgebers **39.**

Die Taktfrequenz ist umschaltbar ausgebildet. Es gibt nämlich Einrichtungen, welche ihren Zweck erfüllen, wenn sie nur kurzzeitig auf eine sich in ihrem Einflussbereich befindende Person einwirken. In diesem Fall wird die betreffende Einrichtung ein Signal aussenden, welches im Personengerät eine Umschaltung des Taktgebers bewirkt. Der Taktgeber schaltet automatisch zurück, wenn der Sendebereich verlassen wird.

Die Anordnung kann nun, wie bisher beschrieben, unabhängig von der Uhrzeit betrieben werden, wobei dann die Signale nur hintereinander abgespeichert werden. Vorzugsweise wird man jedoch eine Zuordnung zur Uhrzeit vornehmen. Die Uhrzeit kann zudem in die Koinzidenzroutine einfliessen. Auch kann es wichtig sein, zu welcher Uhrzeit eine Einrichtung eine starke oder eine schwache Akzeptanz hatte. Soll die Uhrzeit mit einfliessen, wird man vorzugsweise das Personengerät als Armbanduhr **41** ausbilden, die neben der Zeitanzeige die oben erwähnten Funktionen beinhaltet. Eine Antenne **43** eines zu den Empfängern **19a** bzw. **19b** analog ausgebildeten Empfängers **44** kann dann im Uhrengehäuse, wobei dieses dann vorzugsweise, aber nicht zwingend, aus einem Kunststoff zu bestehen hat, oder im Armband untergebracht werden. Die Vorderseite der Uhr weist dann eine Zeitanzeige **45** und, falls gewünscht, eine weitere Anzeige **47** für beispielsweise eine Empfangs- bzw. Aufnahmebereitschaft eines von einer Sendereinheit **3a** bis **3c** bzw. **15** einer der Einrichtung **1a** bis **1c** ausgesandten Signals auf. Ein aus dem über die Antenne **43** empfangenen, drahtlos übermittelten (HF-)Signal durch den Empfänger **44** erhaltenes niederfrequentes (NF) Identifizierungssignal wird auf einen Analog-Digital-Converter **49** gegeben. Das aufbereitete NF-Signal wird in einen Zwischenspeicher **50** geführt, auf den der bereits oben erwähnte Taktgeber **40** einwirkt. Der Taktgeber **40** ist zur oben erwähnten Umschaltung der Taktfrequenz mit dem Empfänger **44** verbunden. Auch der Analog-Digital-Converter **49** ist mit dem Taktgeber **40** verbunden. Ein Durchschalten des nun digitalisierten NF-Signals wird jeweils nur durch den Taktgeber **40** frei gegeben. Die Freigabezeiten des Taktgebers **40** richten sich nach den zu erkennenden und später in der Zentrale **27** zu verarbeitenden Identifizierungssignalen. Die Freigabezeiten liegen im Sekunden- und Subsekundenbereich. Es können Datenpakete bis hinunter in den Mikrosekundenbereich übermittelt werden. Der Taktgeber **40** ist mit einem Zeitgenerator **51,** in der Regel einem Schwingquarz und dessen dazugehörenden Elektronik, verbunden. Der Zeitgenerator **51** steuert zudem die Zeitanzeige **45.** Die Zeitanzeige kann auf die Bedürfnisse der das Personengerät tragenden Person eingestellt werden. Der Zeitgenerator **51** wird vorzugsweise in der Zentrale auf die sogenannte GPS-Zeit eingestellt und läuft dann quarzgesteuert sehr genau weiter. Die anzuzeigende Zeit (jedoch nicht die "interne Zeit") kann von der Person verstellt werden; es gibt z.B. Personen, welche, um immer pünktlich zu sein, die anzuzeigende Uhrzeit auf 5 oder 10 Minuten "vor der Zeit" einstellen. Da der Taktgeber **40** mit dem Zeitgenerator **51** verbunden ist, kann eine Signalaufnahme der Identifzierungssignale der Einrichtungen immer zu einem vorgegebenen Zeitpunkt erfolgen. Unter Kenntnis dieses vorgegebenen Zeitpunktes lässt sich der Rechenaufwand der Koinzidenzbildung in der Zentrale 27 verkürzen.

In der durch den Taktgeber **40** bestimmten aufnahmefreien Restzeit werden Daten aus dem Zwischenspeicher **50** ausgelesen und in einer mit diesem verbundenen Fourier-Transformationseinheit **53** in ein Frequenzspektrum umgewandelt. Die Daten des Frequenzspektrums werden in einer Datenkompressionseinheit **54** komprimiert (z.B. Huffmann-Kodierung; Lempel-Ziv-Welch-Verfahren, usw.) und in einem von der Zentrale **27** auslesbaren Speicher **55** abgespeichert. Falls als notwendig erachtet, könnte das komprimierte Signal verschlüsselt werden. Die Durchführung einer Fourier-Transformation ist keineswegs zwingend. Es können auch andere Verfahren verwendet werden, wie beispielsweise eine Wavelet-Transformation. Ein bevorzugtes Verfahren zur Verarbeitung der digitalisierten Daten ist in der EP 0 598 682 A1 (Liechti AG) beschrieben.

Auf den Analog-Digital-Converter **49** kann verzichtet werden, wenn das mit der Antenenne **43** empfangene elektromagnetische Identifizierungssignal bereits als digitales Signal vorliegt.

Das oben angeführte Verfahren funktioniert allerdings nur, wenn die Person das Personengerät **41** auch trägt und nicht irgendwo herumliegen lässt. Um den Zustand des Tragens bzw. die Tageszeiten des Tragens zu ermitteln, ist im Personengerät **41** ein wenigstens eine Körperfunktion detektierendes Element **57** integriert. Als Körperfunktionen können Hautschweiss, Körpertemperatur, Blutdruck, Puls usw. verwendet werden; es kann alternativ oder zusätzlich auch ein Bewegungssensor (bevorzugt mit einer beweglichen Quecksilberkugel) verwendet werden. Vorzugsweise wird man bei der Ausgestaltung des Personengeräts **41** den Puls messen, da er keine Fehlinterpretation aufgrund von Umgebungseinflüssen zulässt. Alternativ können zur Sicherstellung eines eindeutigen Ergebnisses auch gleichzeitig die Temperatur und Bewegungen gemessen werden. Die detektierten Körperfunktionen können im Speicher **55** abgespeichert werden. Werden keine Körperfunktionen gemessen, erfolgt zur Energieersparnis eine Abschaltung des Personengeräts **41.**

Dem Zwischenspeicher **50** kann ein Vergleicher **59** nachgeschaltet werden. Der Vergleicher ist mit dem Taktgeber **40,** dem Zeitgenerator **52** und dem Speicher **55** verbunden. Der Vergleicher **59** lässt ein aus dem Zwischenspeicher **50** kommendes Signal nur passieren, wenn es sich vom vorhergehenden unterscheidet. Unterscheiden sich die Signale, so wird das letzte Signal nach Durchlaufen der Komponenten **53** und **54** zusammen mit der Uhrzeit abgespeichert. Dieses Verfahren dient zur Reduzierung der im Speicher 55 gespeicherten Datenmenge.

Neben den mit einer elektromagnetischen Strahlung übermittelten Dateninhalten der Identifizierungssignale können auch, insbesondere akustische, Umgebungsinformationen abgespeichert werden. Hieraus lassen sich dann Rückschlüsse über das Freizeitverhalten schliessen.

An dem vorzugsweise als Armbanduhr ausgebildeten Personengerät **41** können auch Eingabemittel **63** vorgesehen sein. Die Eingabemittel **63** dienen dazu, einen "Dialog" mit der betreffenden Einrichtung zu führen. Es könnte beispielsweise nicht nur von Interesse sein, festzustellen, ob die in der Sendereichweite sich befindende, das Personengerät **41** tragende Person die Einrichtung wahrgenommen hat, sondern auch, wie die Einrichtung auf die Person wirkt (schön, hässlich, unbedeutend, ...). Am Personengerät **41** können dann die hierzu notwendigen Fragen auf der Anzeige **47** dargestellt werden.

Die Eingabemittel könnten jedoch auch dazu verwendet werden, um bei einer Akzeptanzanalyse von Zeitungen und Illustrierten festzustellen, welche Artikel bevorzugt gelesen werden. In diesem Fall werden die Eingabemittel eher einer Tastatur eines Handys mit einer Mehrfachbelegung der Tasten gleichen. Es können dann Artikelkennzeichnung sowie eine Kennzeichnung für das Interesse und eine Beurteilung eingegeben werden. Sofern sich in der Nähe eine Einheit befindet, kann dann auch noch festgestellt werden, wo (zu Hause, in der Eisenbahn, ...) der betreffende Artikel gelesen worden ist.

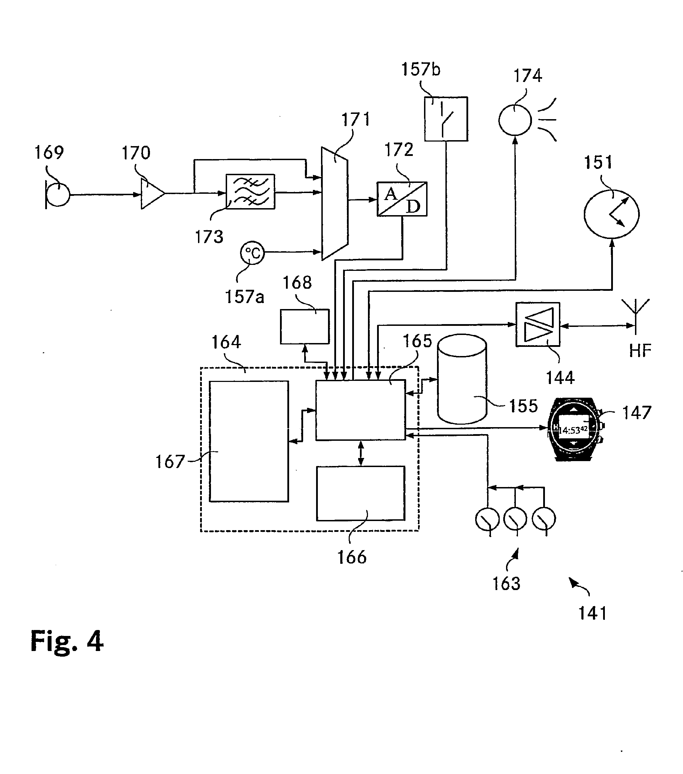

Die **Figur 4** zeigt ein Blockdiagramm eines weiteren Ausführungsbeispiels eines erfindungsgemässen Personengeräts **141,** welches ebenfalls in einem Armbanduhrengehäuse untergebracht ist. Das Personengerät **141** umfasst wiederum eine Echtzeituhr **151,** deren Signal einerseits zur Taktung des Betriebs des Personengeräts **141** (Empfang von Signalen, Abspeicherung in einem Gerätespeicher **155** etc.) und andererseits zur Steuerung der Zeitanzeige auf dem LCD **147** genutzt wird. Der Empfang, die Verarbeitung, die Speicherung und die Ausgabe sämtlicher Signale und Informationen wird durch einen sogenannten "System-on-Chip"-Prozessor **164** gesteuert und z.T. vorgenommen. Dieser ist als hybrider Controller ausgeführt, mit einer MCU (micro-controller unit) **165** und einem DSP (digital signal processor) **166,** welche intern miteinander verschaltet sind. Der DSP **166** dient insbesondere zum Komprimieren (und damit Chiffrieren) der Audio-Signale. Weiter umfasst der "System-on-Chip"-Prozessor **164** einen internen Speicher **167** zum temporären Ablegen von Daten.

Das Personengerät **141** umfasst wiederum einen HF-Empfänger **144,** welcher mittels einer Antenne elektromagnetische HF-Signale empfängt, insbesondere Identifizierungssignale von an Einrichtungen angeordneten Sendereinheiten. Die Signale werden vom HF-Empfänger **144** aufbereitet (also je nach Signaltyp demoduliert, decodiert und/oder A/D (analog/digital) gewandelt) und über eine Microwire 1-Draht-Schnittstelle zum "System-on-Chip"-Prozessor **164** übermittelt. Getaktet durch das Zeitsignal der Echtzeituhr **151** und gesteuert durch den "System-on-Chip"-Prozessor **164** werden die empfangenen und aufbereiteten Identifizierungssignale im Gerätespeicher **155** (16 MBytes Flash) abgelegt. Zwischen dem "System-on-Chip"-Prozessor **164** und dem Gerätespeicher **155** wie auch zwischen dem "System-on-Chip"-Prozessor **164** und dem LCD **147** sind eine EMIFS-Schnittstelle (external memory interface slow) vorgesehen. Um von aussen auf den Inhalt des Gerätespeichers **155** zuzugreifen, ist eine Schnittstelle **168** vorhanden, welche mit dem "System-on-Chip"-Prozessor **164** gekoppelt und von diesem gesteuert ist. Diese erlaubt die Kommunikation des Personengeräts **141** mit einer sogenannten Docking Station, welche für jeden Benutzer des Personengeräts **141** oder in einer Zentrale vorgesehen werden kann. Im ersten Fall kann der Benutzer regelmässig beispielsweise den Gerätespeicher über die Docking Station auslesen und automatisch an die Zentrale übermitteln lassen. Dies ermöglicht aktuellste Daten, ohne dass eine Rücksendung des Personengeräts **141** notwendig ist. Im zweiten Fall werden die Daten in der Zentrale aus dem Gerätespeicher ausgelesen, und der Benutzer muss sich nicht um diesen Schritt kümmern.

Das Personengerät **141** umfasst ausserdem ein Mikrofon **169** und eine entsprechende Vorverstärkereinheit **170,** deren Signale über einen analogen Multiplexer/Switch **171** zu einem 14bit-Analog-Digital-Wandler (ADC) **172** übermittelt werden. Zwischen der Vorverstärkereinheit **170** und dem analogen Multiplexer/Switch **171** ist ausserdem ein zuschaltbarer Filter **173** vorgesehen. Dieser filtert aus dem Tonsignal niederfrequente Anteile heraus, welche für die Akzeptanzmessung von Radio- und Fernsehsendern benötigt werden. Für andere Anwendungen kann der Filter **173** umgangen werden, so dass das ganze Frequenzspektrum für die weitere Verarbeitung zur Verfügung steht. Das aus dem Tonsignal erzeugte digitale Signal, bzw. gewisse Abschnitte davon werden wiederum vom "System-on-Chip"-Prozessor **164** gesteuert im Gerätespeicher **155** abgelegt. An den analogen Multiplexer/Switch **171** angeschlossen ist ausserdem der Temperatursensor **157a,** dessen analoges Signal ebenfalls durch den Analog-Digital-Wandler **172** gewandelt und im "System-on-Chip"-Prozessor **164** weiter verarbeitet wird. Weil üblicherweise das Tonsignal nur in kurzen Zeitabschnitten (beispielsweise pro Minute drei Abschnitte zu 4 Sekunden) benötigt wird, um später eine Koinzidenzbildung mit abgespeicherten Zeitraumeinrichtungssignalen zu ermöglichen, wird der analoge Multiplexer/Switch **171** vom "System-on-Chip"-Prozessor **164** über eine MPUIO-Schnittstelle (micro-processor unit input/output) während dieser Zeit auf das Mikrofon **169** und die Vorverstärkereinheit **170,** während der verbleibenden Zeit auf den Temperatursensor **157a** geschaltet. Auf diese Weise kann ein einzelner Analog-Digital-Wandler **172** die Signale beider Bausteine verarbeiten, und es wird nur eine einzige Schnittstelle (wiederum eine Microwire-1-Draht-Schnittstelle) zum "System-on-Chip"-Prozessor **164** benötigt.

Der Temperatursensor **157a** dient (unter anderem) zum Feststellen, ob das Personengerät **141** von einer Person getragen wird oder nicht. Um die Sicherheit dieser Feststellung zu verbessern, ist im Personengerät auch ein Neigungssensor **157b** vorgesehen. Dieser umfasst eine bewegliche Quecksilberkugel, welche je nach Neigungszustand einen elektrischen Kontakt herstellt. Das Schliessen oder Öffnen des Kontakts lässt darauf schliessen, dass das Personengerät **141** bewegt (oder beschleunigt) wird und erlaubt dadurch Rückschlüsse darauf, ob das Gerät auch von der Person getragen (oder zumindest mitgeführt) wird. Es sind auch feinere Analysen des Signalmusters des Neigungssensors **157b** möglich, durch welche beispielsweise Bewegungsmuster ausgeschlossen werden, welche untypisch sind für ein Personengerät, das am Handgelenk einer Person getragen wird. Das Signal des Neigungssensors **157b** wird über eine McBSP (multichannel buffered serial port) an den "System-on-Chip"-Prozessor **164** zur Weiterverarbeitung übermittelt.

Der Temperatursensor **157a** kann auch dazu verwendet werden, um (nebst anderen Indizien) festzustellen, ob sich die Person zur Zeit in einem Gebäude oder ausserhalb befindet; er erlaubt also gewisse Rückschlüsse auf den derzeitigen Ort.

Am Personengerät **141** sind Eingabemittel **163,** z.B. mehrere Druckknöpfe, angeordnet (siehe unten). Die durch die Betätigung der Eingabemittel **163** erzeugten Signale werden über eine MPUIO-Schnittstelle an den "System-on-Chip"-Prozessor **164** übermittelt. Das Personengerät **141** umfasst schliesslich einen Summer **174** zum Erzeugen von Signaltönen, z.B. Alarm-, Warn- und Hinweissignalen für den Benutzer.

Der "System-on-Chip"-Prozessor **164** ist in der Lage, unabhängig voneinander und gleichzeitig, sowohl die anfallenden Audio- und HF-Daten sowie die Signale der Sensoren **157a, 157b** und der Eingabemittel **163** zu verarbeiten, als auch die LCD-Anzeige **147,** den Summer **174** und die Schnittstelle **168** anzusteuern. Dadurch ist gewährleistet, dass der Benutzer jederzeit alle Funktionen des Personengeräts **141** nutzen kann; dass er beispielsweise jederzeit die Nutzung von Printmedien erfassen oder andere manuelle Aktionen tätigen kann.

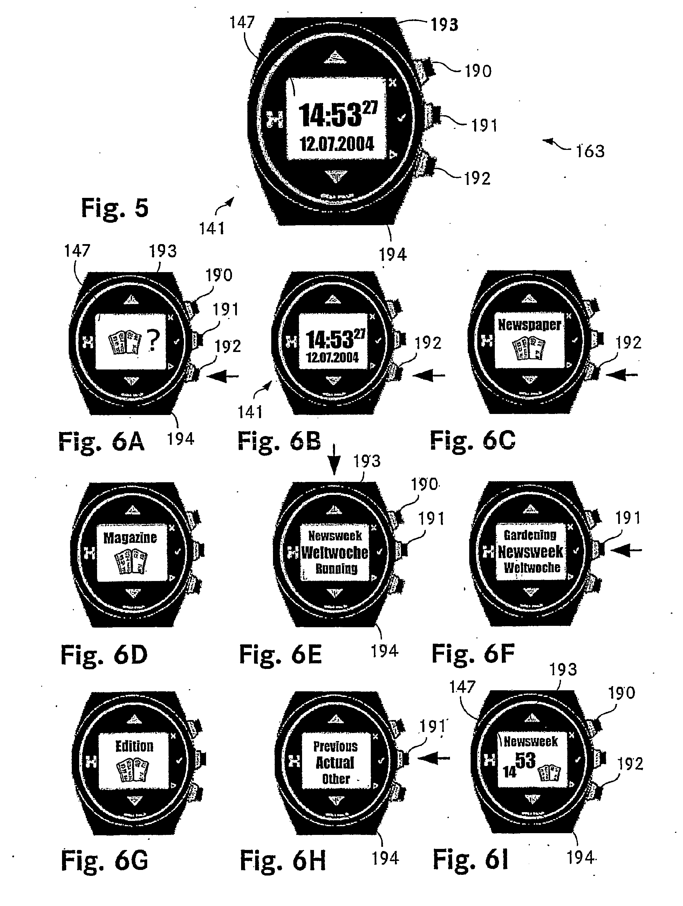

Die **Figur 5** zeigt eine Aussenansicht des Personengeräts **141.** Es hat die Form einer Armbanduhr mit der bereits oben erwähnten LCD-Anzeige **147,** drei seitlichen Knöpfen **190, 191, 192** und zwei oberhalb und unterhalb der LCD-Anzeige **147** angeordneten Scroll-Betätigungsflächen **193** und **194** (als gleichseitiges Dreieck gekennzeichnet). Der oberste der seitlichen Knöpfe **190** ("Cancel") dient generell zum Rückgängigmachen oder Abbrechen von Aktionen. Der mittlere der Knöpfe **191** ("Confirm") dient zum Bestätigen, und der unterste der Knöpfe **192** ("Activate") hat Aktivierungsfunktionen. Die Benutzerführung ist weiter unten eingehender beschrieben. Die Scroll-Betätigungsflächen **193** und **194,** welche als Folientasten oder Teil einer berührungsempfindlichen Anzeige ("touch screen") ausgebildet sind, dienen zum Scrollen des angezeigten Inhalts nach oben und nach unten, z.B. beim Tätigen einer Auswahl aus mehreren Möglichkeiten. Neben den genannten Funktionen, stellen die Eingabemittel **163** die bei einer Armbanduhr üblichen Funktionen bereit (Einstellen der Zeit, des Datums, des Alarms, Stoppuhr-Funktionen etc.). So kann der Benutzer beispielsweise durch simultanes Drücken der Knöpfe **190** und **192** ("Cancel" und "Activate") während fünf Sekunden die Einstellung der Uhrzeit und des Datums einleiten.

Im Zusammenhang mit den **Figuren 6A-M** wird die Funktionsweise der Akzeptanzermittlung von Printmedien erläutert. In den Figuren dargestellt ist der jeweilige Zustand der LCD-Anzeige **147** während verschiedenen Schritten der Benutzerführung. Generell werden die für die Akzeptanzermittlung von Printmedien genutzten Informationen über die Eingabemittel **163,** d.h. die Knöpfe **190, 191** und **192** und die Scroll-Betätigungsflächen **193** und **194** erfasst. Die Benutzerführung erfolgt mittels der LCD-Anzeige **147.**

Damit der Benutzer nicht vergisst, seine Nutzung von Printmedien, d.h. die Lektüre von Zeitungen oder Zeitschriften, zu erfassen, wird er regelmässig daran erinnert, beispielsweise drei Mal täglich (z.B. um 10 Uhr 30, 13 Uhr 30 und 21 Uhr), und zwar unabhängig davon, ob an diesem Tag bereits Nutzungen von Zeitungen oder Zeitschriften erfasst wurden. Die Erinnerung erfolgt rein optisch, weil akustische Erinnerungssignale für den Benutzer störend sein könnten (z.B. wenn diese während einer Besprechung oder eines Konzerts erfolgen). Zu diesem Zweck wird - wie in der **Figur 6A** dargestellt - auf der Anzeige **147** während fünf Minuten ein Symbol für eine Zeitung zusammen mit einem Fragezeichen eingeblendet. Der Benutzer kann nun entweder bestätigen, dass er die Zeitungslektüre erfassen will, indem der den Knopf **192** ("Activate") betätigt, oder durch Drücken einer der anderen seitlichen Knöpfe **190** und **191** angeben, dass zur Zeit keine Lektüre stattfindet. In diesem Fall wird wieder auf die Normalanzeige mit Uhrzeit und Datum zurückgeschaltet. Anstelle der optischen Erinnerung kann jedoch auch ein lautloser Vibrator verwendet werden.

Anstatt auf der Anzeige **147** während fünf Minuten ein Symbol für eine Zeitung zusammen mit einem Fragezeichen einzublenden, kann die Anzeige auch stehen bleiben bis sie bedient wird. Anstelle eines akustisch nicht störenden optischen Erinnerungssignals kann auch ein lautloses Vibrationssignal vorzugsweise auf den Boden des Personengerätes **141** gegeben werden.

Der Benutzer kann auch von sich aus zu jedem anderen Zeitpunkt die Erfassung einer Nutzung von Printmedien starten. Dazu drückt er (wie in der **Figur 6B** dargestellt) im normalen Betriebszustand des Personengeräts **141** auf den untersten seitlichen Knopf **192** ("Activate"). In beiden Fällen wird anschliessend die Wahl der Erfassung der Lektüre durch die in der **Figur 6C** dargestellten Anzeige bestätigt, welche wiederum das Zeitungssymbol zeigt sowie angibt, dass die Lektüre einer Zeitung ("Newspaper") erfasst werden soll. Möchte nun der Benutzer die Lektüre eines Magazins erfassen, drückt er erneut auf den Knopf **192** ("Activate"), worauf neu angegeben wird, dass die Lektüre eines Magazins ("Magazine") erfasst werden soll. Natürlich können weitere Kategorien (Bücher, Untergruppen der genannten Kategorien etc.) vorgesehen sein.

Im dargestellten Fall, in welchem nur zwischen Zeitungen und Zeitschriften unterschieden wird, genügt es, wenn die in der **Figur 6D** dargestellte Anzeige ca. 1 Sekunde bestehen bleibt und dann automatisch in die Zeitschriften-Auswahl gewechselt wird (siehe **Figur 6E****),** eine Bestätigung durch den Benutzer muss nicht erfolgen. (Dieser wird ohnehin nach den ersten Erfassungsvorgängen "blind" den "Activate"-Knopf **192** entweder ein- oder zweimal drücken, je nach der jeweiligen Lektüre.)

Die Zeitschriften-Auswahl zeigt jeweils drei Titel untereinander auf drei Zeilen. Der mittlere angezeigte Titel kann jeweils durch den Druck auf den mittleren seitlichen Knopf **191** ("Confirm") ausgewählt werden. Durch Druck auf den obersten Knopf **190** ("Cancel") wird die Erfassung der Printmedien-Nutzung abgebrochen und wieder die Zeit und das Datum angezeigt (siehe **Figur 5****).** Möchte der Benutzer nun eine andere Zeitschrift wählen, im dargestellten Beispiel die in der ersten Zeile stehende "Newsweek", so kann er in der dargestellten Liste "scrollen" durch Druck auf eine der zwei Scroll-Betätigungsflächen **173, 174.**

Die Liste der auswählbaren Zeitungen bzw. Zeitschriften wird vorgängig vom Bereitsteller der Personengeräte **141** in den Geräten abgespeichert. Damit der Benutzer bei der Wahl eines Titels nicht die gesamte Auswahl (mit gegebenenfalls mehr als 100 Titeln) durchgehen muss, sind einige Titel (bevorzugt maximal 10) als "Favoriten" gekennzeichnet. Diese erscheinen stets zuoberst auf der Auswahlliste, wobei deren Reihenfolge zufällig (oder nach einem vorgegebenen System) von Auswahlvorgang zu Auswahlvorgang geändert wird, damit nicht durch eine fixe Reihenfolge das Ergebnis der Ermittlungen systematisch verfälscht werden kann. Die Favoriten werden einerseits vor der eigentlichen Benutzung des Personengeräts **141** festgelegt, z.B. auf der Basis eines Fragebogens, welcher der Benutzer vorgängig ausfüllen musste (im Zusammenhang mit der Erhebung von Daten, welche für die spätere Analyse verwendet werden) und auf der Basis von vorhandener Information (z.B. der Muttersprache und des Wohnorts des Benutzers). Der Benutzer hat beispielsweise angegeben, welche Titel er abonniert hat und welche er regelmässig kauft oder liest. Falls die Favoritenliste noch nicht voll ist, werden auch während der Benutzung des Personengeräts **141** noch Zeitungen oder Zeitschriften darin aufgenommen, welche der Benutzer manuell ausgewählt hat. Die Favoritenliste kann auch im Sinn einer Rangliste organisiert sein, d.h. sobald einer der "Nicht-Favoriten"-Titel häufiger ausgewählt worden ist als der am wenigsten genutzte Favorit, rückt der neue Titel in die Favoritenliste vor und verdrängt den ehemaligen Favoriten.

Im dargestellten Fall drückt der Benutzer zur Auswahl des Titels zunächst auf die obere Scroll-Fläche **193,** so dass oben eine weitere Zeitschrift ("Gardening") dargestellt wird und die Zeitschrift "Newsweek" neu in der mittleren Zeile dargestellt wird (siehe **Figur 6F).** Der Benutzer bestätigt nun seine Auswahl durch Druck auf den mittleren seitlichen Knopf **191** ("Confirm").

Während einer Sekunde erfolgt nun die in der **Figur 6G** dargestellte Anzeige des Zeitungssymbols zusammen mit "Edition", um dem Benutzer anzuzeigen, dass als Nächstes die Auswahl der gelesenen Ausgabe erfolgen wird. Nach etwa einer Sekunde wird die in der **Figur 6H** dargestellte Auswahl präsentiert. Ähnlich wie bei der Zeitschriftenliste kann nun der Benutzer durch Betätigen der Scroll-Betätigungsflächen **193** und **194** und des "Confirm"-Knopfs **191** die gelesene Ausgabe auswählen. Im gezeigten Fall hat er die Wahl zwischen der aktuellen Ausgabe ("Actual"), der vorherigen Ausgabe ("Previous") oder einer anderen (früheren) Ausgabe ("Other"), wie es beispielsweise bei wöchentlich oder monatlich erscheinenden Publikationen sinnvoll ist.

Sobald der Benutzer die Ausgabe gewählt hat, erscheint in der Anzeige **147** wiederum die aktuelle Zeit, allerdings in einer gegenüber dem normalen Betriebszustand veränderten Darstellung mit kleinen Ziffern für die Stunden und hochgestellten grossen Ziffern für die Minuten **(siehe** **Figur 6I****).** Die Sekunden werden nicht angezeigt. Zusätzlich wird unten rechts das Zeitungssymbol angezeigt und zuoberst erscheint der Name der ausgewählten Zeitung oder Zeitschrift, im dargestellten Fall also "Newsweek". Von diesem Zeitpunkt an wird die Dauer der Lektüre erfasst. Ein Abbruch durch Druck auf den obersten seitlichen Knopf **190** ist in dieser Phase nicht mehr möglich. Auch ein Druck auf den untersten Knopf **192** oder die Betätigungsflächen **193** und **194** hat in dieser Phase keine Wirkung.

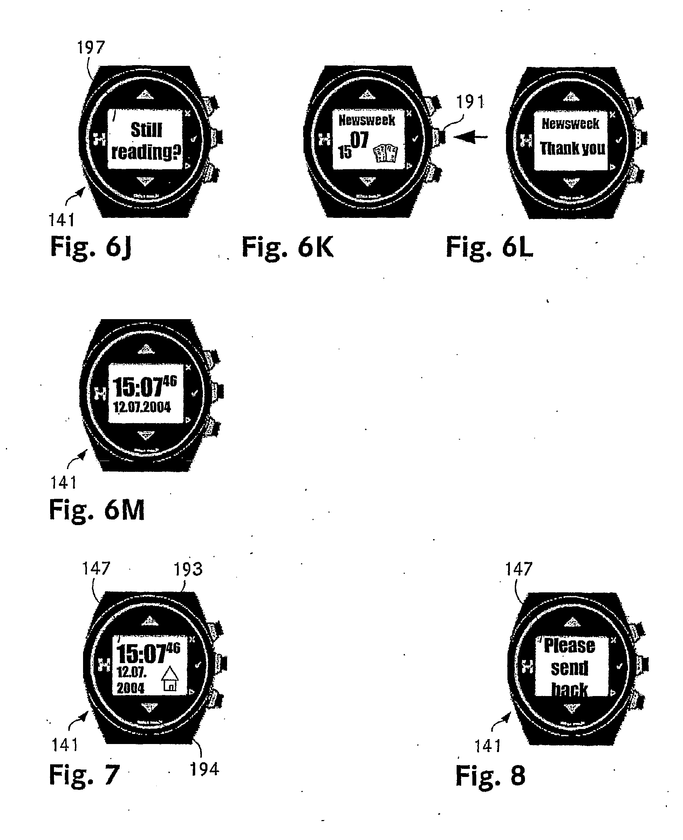

Während der Lektüre wird der Benutzer regelmässig (z.B. das erste Mal nach 30 Minuten, dann alle 15 Minuten) daran erinnert, dass er den Abschluss der Lektüre melden soll. Diese Erinnerung erfolgt einerseits durch eine fünf Sekunden lang dargestellte optische Meldung "Still reading?" in der Anzeige **147** des Personengeräts **141 (****Figur 6J****),** andererseits durch ein akustisches Signal. Die Meldung "Still reading?" ist lediglich als Beispiel zu denken. Anstelle einer einzigen Meldung können selbstverständlich mehrere Meldungen auch in einer zeitlichen Abfolge angezeigt werden. Auch können andere Sprachen als ausgerechnet englisch verwendet werden.

Sobald der Benutzer die Lektüre abgeschlossen hat (oder sich einer anderen Zeitung oder Zeitschrift zuwendet), drückt er auf den mittleren Knopf **191** ("Confirm"), siehe **Figur 6K.** Dies kann auch unabhängig von der Erinnerungsmeldung erfolgen. Daraufhin wird der Erfassungsvorgang beendet, die ermittelten Daten (gelesener Titel, Ausgabe, Zeitpunkt, Zeitdauer) im Gerätespeicher abgelegt und dem Benutzer für drei Sekunden die Mitteilung gemäss der **Figur 6L** dargestellt. Anschliessend geht das Personengerät in den Normalzustand zurück und zeigt wiederum die Uhrzeit (mit Sekunden) und das Datum an **(****Figur 6M****).**

Bei der Erfassung der Nutzung von Printmedien mit einem erfindungsgemässen Personengerät müssen nicht in jedem Fall sämtliche dargestellten Schritte durchlaufen werden. Wird z.B. auf die Bestimmung der Nutzungsdauer verzichtet, so ist der Erfassungsvorgang nach dem Bestätigen des gewählten Titels **(****Figur 6H****)** abgeschlossen. Die Erfassung der Ausgabe **(****Figuren 6G, 6H****)** kann ebenfalls unterbleiben. Falls nur wenige Titel zur Auswahl stehen, kann auch die Unterscheidung in "Zeitungen" und "Zeitschriften" entfallen **(****Figuren 6C, 6D****).**

Es sind aber auch zusätzliche Schritte möglich, so kann beispielsweise eine zusätzliche Auswahl verlangt werden, in welcher der Nutzer beispielsweise auswählen kann, welchen Teil einer Zeitung (Politik, Sport, Kultur, Lokales etc.) er gerade liest.

Die **Figur 7** zeigt die Anzeige **147** des Personengeräts **141** bei der Erfassung des Ortes einer Nutzung. Der Ort und die Darstellungsform der Zeit und des Datums sind so angepasst, dass im rechten unteren Bereich der Anzeige ein Freiraum geschaffen wird, in welchem ein dem Ort zugeordnetes Symbol dargestellt werden kann. Im gezeigten Fall handelt es sich um ein stilisiertes Häuschen, welches dem Benutzer anzeigt, dass als gegenwärtiger Nutzungsort "zu Hause" eingestellt ist. Der Benutzer kann den Ort (die Ortskennzeichnung) manuell verstellen durch Druck auf eine der Scroll-Betätigungsflächen **193** und **194.** Dadurch werden die verfügbaren Orte (oder Ortskategorien) wie "zu Hause", "auf dem Arbeitsweg", "im Büro", "im Restaurant" etc. durchgeschaltet. Die Ortskennzeichnung kann auch automatisch gewechselt werden, wenn das Personengerät **141** das Identifizierungssignal einer bekannten Einrichtung empfängt und dieser einen anderen Ort (bzw. eine andere Ortskategorie) zuordnen kann als die aktuell eingestellte. Falls eine Nutzung einer Einrichtung oder eines Mediums erfasst und im Gerätespeicher abgelegt wird, wird gleichzeitig auch der aktuelle Ort gespeichert. Dies erlaubt bei der Auswertung der erfassten Daten nähere Rückschlüsse auf den Ort der Nutzung, ob beispielsweise bei der Arbeit Radio gehört oder auf dem Arbeitsweg in einem öffentlichen Verkehrsmittel Zeitung gelesen wird, und damit auch, ob Unterschiede bestehen in der Nutzung verschiedener Radiosender oder Zeitungstitel zu Hause und im Büro bzw. auf dem Arbeitsweg. Im Weiteren kann "freiwilliger" Konsum (zu Hause) von "fremdbestimmtem" Konsum (z.B. von Radiosendern in Restaurants) unterschieden werden.

Die **Figur 8** stellt die Anzeige **147** des Personengeräts **141** nach dem Ende des Erfassungszeitraums für eine Person dar. Die Übermittlung der im Personengerät **141** gespeicherten Daten erfolgt am einfachsten, indem das Personengerät **141** zur Zentrale zurückgeschickt wird, wo die Daten aus dem Gerätespeicher ausgelesen und ausgewertet werden. Damit aktuelle Auswertungen möglich sind, wird das Personengerät nur während einer gewissen Zeitdauer (einige Tage bis einige Wochen) an jeweils eine Person abgegeben. Nach dem Ende dieser Zeitdauer wird die Person aufgefordert, das Personengerät **141** wieder an die Zentrale zurückzuschicken. Dass die Zeitdauer abgelaufen ist, wird der Person durch die in der **Figur 8** dargestellte Meldung "Please send back" angezeigt. Damit die Person nicht von der Meldung überrascht wird und plötzlich keine Zeit- und Datumsinformationen mehr zur Verfügung hat, kann die Meldung zunächst alternierend mit der normalen Anzeige des Personengeräts **141** erfolgen - oder die Zeit und das Datum werden nur mehr angezeigt, solange die Person auf einen definierten Knopf drückt. Erst nach einer gewissen Zeit (z.B. nach 24 Stunden) wird die Meldung dauerhaft angezeigt. Die Erfassung der Nutzung von Einrichtungen und Medien kann nach dem Ablauf der vorbestimmten Zeitdauer automatisch gestoppt werden.

Neben einer Tastatur oder auch anstelle dieser kann ein Steckeranschluss vorhanden sein. In diesen Steckeranschluss kann dann ein weiterer Empfänger für elektromagnetische Strahlung angekoppelt werden. Dieser Empfänger kann zur drahtlosen Übertragung weiterer Signale dienen, deren Dateninhalt im Speicher **55** abgespeichert werden. Die Daten können nun direkt oder auch nach der oben geschilderten Komprimierung abgespeichert werden. Die Komprimierung kann im Personengerät oder in einer Zentrale vorgenommen werden.

Es kann aber auch eine sogenannten "Dockingstation" in der Wohnung einer das Personengerät tragenden Person vorhanden sein. Diese "Dockingstation" wird man dann vorzugsweise über das Telefonnetz mit einer Zentrale verbinden. Ist eine dezentrale "Dockingstation" vorhanden, kann auf eine Komprimierung der Daten im Personengerät verzichtet werden, da die Daten nahezu täglich zur "Dockingstation" transferiert werden. Die "Dockingstation" kann dann falls notwendig eine Komprimierung vornehmen.

Man kann nun beispielsweise einen Barcodeleser verwenden, mit dem Daten abgenommen werden, die dann drahtlos übermittelt werden. Man kann hiermit auch die Hörgewohnheiten von Personen aufnehmen, welche mit Kopfhörern hören und somit mit den üblichen akustischen Senderhöraufzeichnungen nicht ausgewertet werden können. Es wird an die Kopfhörerbuchse ein kleines Sendegerät angeschlossen, an das wiederum das Kopfhörerkabel angeschlossen wird. Der Sender dieses Sendegeräts hat eine sehr kurze Reichweite. Er muss lediglich eine Sendeverbindung bis zum Personengerät ("Armbanduhr") aufrecht erhalten.

Über die Eingabemittel kann auch ein Aufladen von Akkumulatoren im Personengerät vorgenommen und der korrekte Gang eines Zeitgebers überprüft werden.

Anstatt das Personengerät als Armbanduhr auszubilden, kann es auch als Schmuckstück, wie beispielsweise eine Brosche ausgebildet sind. Man kann es auch in der Art eines Ohrstöpsels ausbilden. Sollen mit dem Personengerät zusätzlich die Akzeptanz von Sendungen des Hör- und Fernsehfunks alleine oder zusammen mit den Identifizierungssignalen der Einrichtungen aufgezeichnet werden, so kann ein zusätzliches Mikrofon verwendet werden, dessen Datenkompression anlog zu derjenigen des elektromagnetischen Signals vorgenommen wird. Um das Hörverhalten bei mit Kopfhörern gehörten Sendung zu erhalten, könnte in das Kopfhörerkabel ein Sender für eine entsprechende elektromagnetische Strahlung eingesetzt werden.

Als elektromagnetische Strahlung wird man Höchstfrequenzstrahlung im Giga- bzw. Subgigahertzbereich verwenden; es kann aber auch eine optische Strahlung im sichtbaren bzw. angrenzenden nicht sichtbaren Bereich verwendet werden.

Jede Einrichtung hat wenigstens einen Einrichtungssender. Es können mehrere Einrichtungssender vorhanden sein, um z.B. den Sendebereich räumlich auszuweiten. Es können aber auch mehrere Sender vorhanden sein, welche unterschiedliche Identifizierungssignale aussenden. Dies kann von Vorteil sein, wenn Personengeräte ausgegeben werden, welche für unterschiedliche Personengruppen spezifiziert sind.

Jeder Einrichtungssender hat einen Höchstfrequenzteil zum Aussenden der Trägerfrequenz (Gigahertz, optisch) und einen Niederfrequenzteil für das auf die Trägerfrequenz aufzuprägende Identifizierungssignal. Das Identifizierungssignal kann nun eine zwar programmierbare, aber über einen längeren Zeitraum feste Datenfolge sein; es kann aber auch eine sich kontinuierlich ändernde Datenfolge sein.

## Patentansprüche

1. Verfahren zur Ermittlung einer Akzeptanz von Einrichtungen **(1a-c),** wobei von jeder Einrichtung **(1a-c)** ein elektromagnetisches Identifizierungssignal **(5a-c)** mit einem Dateninhalt und mit einem eine vorgegebene Reichweite **(17a-c)** definierenden Sendebereich ausgesandt wird, und der momentane Dateninhalt von einem von einer Person **(6a-d; 24)** getragenen Personengerät **(7a-d; 41; 141)** empfangen und abgespeichert wird, wobei der Sendebereich der Einrichtung **(1a-c)** zusammen mit einer Empfangsempfindlichkeit des Personengeräts **(7a-d; 41; 141)** derart aufeinander abgestimmt sind, dass kein Datenempfang mehr möglich ist, sofern sich die Einrichtung **(1 a-c)** bezogen auf das von der Person **(6a-d; 24)** getragene Personengerät **(7a-d; 41; 141)** ausserhalb eines typischen menschlichen Aufmerksamkeits- bzw. Wahrnehmungsbereichs **(25)** befindet, wobei im Personengerät **(41; 141)** mittels eines Zeitgebers **(40; 151)** eine Datenmenge in einem Gerätespeicher **(55; 155)** reduziert und/oder eine zeitliche Zuordnung vorgenommen und/oder ermittelt wird, wie oft und/oder wie lange die das Personengerät **(7a-d; 41; 141)** tragende Person **(6a-d; 24)** sich innerhalb des betreffenden Sendebereichs **(16)** der Einrichtung **(1a-c)** aufgehalten hat, **dadurch gekennzeichnet, dass** im Rahmen des Verfahrens der Zeitgeber **(40; 151)** in einer Taktfolge durch ein Einrichtungssignal zeitlich umgeschaltet wird, so dass eine Taktfrequenz zum Empfangen und Abspeichern des Dateninhalts geändert wird, um diese auf typische Verweildauern der das Personengerät **(7a-d; 41)** tragenden Person **(6a-d; 24)** im Sendebereich **(16)** der jeweiligen Einrichtung **(1a-c)** einzustellen.

2. Verfahren nach Anspruch 1, **dadurch gekennzeichnet, dass** in den Gerätespeicher **(55; 155)** durch Eingabemittel **(63; 163, 190- 194)** am Personengerät **(41; 141)** weitere Informationen eingespeichert werden.

3. Verfahren nach Anspruch 2, **dadurch gekennzeichnet, dass** das Einspeichern durch die Eingabemittel **(63; 163, 190 - 194)** gemäss dem empfangenen Dateninhalt des Identifizierungssignals **(5a-c)** einer der Einrichtungen **(1a-c)** erfolgt.

4. Verfahren nach Anspruch 2, **dadurch gekennzeichnet, dass** das Einspeichern durch die Eingabemittel **(63; 163, 190 - 194)** unabhängig vom Empfang des Dateninhalts des elektromagnetischen Identifizierungssignals **(5a-c)** einer der Einrichtungen **(1a-c)** ist und gleichzeitig mit dem Empfang des Dateninhalts erfolgen kann.

5. Verfahren nach einem der Ansprüche 2 bis 4, **dadurch gekennzeichnet, dass** mindestens eine der folgenden Informationen durch die Eingabemittel **(63; 163, 190-194)** am Personengerät **(41; 141)** erfasst wird:
a) ein Ort einer Nutzung eines Mediums;
b) ein Zeitpunkt und/oder eine Dauer der Nutzung des Printmediums;
c) eine qualitative Angabe über die Nutzung des Mediums oder einer der Einrichtungen.

6. Verfahren nach einem der Ansprüche 1 bis 5, **dadurch gekennzeichnet, dass** neben mit einer elektromagnetischen Strahlung übermittelten Dateninhalten von Identifizierungssignalen auch Umgebungsinformationen unabhängig vom Empfang der Dateninhalte der Identifizierungssignale empfangen und abgespeichert werden, wobei der Empfang und die Abspeicherung der Umgebungsinformationen gleichzeitig mit dem Empfang der Dateninhalte der Identifizierungssignale erfolgen kann.

7. Verfahren nach einem der Ansprüche 1 bis 6, **dadurch gekennzeichnet, dass**
a) die Signale mehrerer Einrichtungen **(1a-c)** aus einem räumlichen Überwachungsbereich und/oder die Umgebungsinformationen während eines Zeitraums in einer Zentrale **(27)** als Zeitraumeinrichtungssignal abgespeichert;
b) in jedem Gerätespeicher **(55; 155)** über den Zeitraum gespeicherte Dateninhalte der Identifizierungssignale oder Umgebungsinformationen später zur Zentrale **(27)** übertragen; und
c) zur Koinzidenzbildung mit den dort gespeicherten Zeitraumeinrichtungssignalen ausgelesen sowie die ermittelten Koinzidenzen verarbeitet werden.

8. Verfahren nach Anspruch 7, **dadurch gekennzeichnet, dass** aus der Koinzidenzbildung mit den abgespeicherten Umgebungsinformationen mindestens eine der folgenden Informationen ermittelt wird:
a) ein Ort der Nutzung eines Mediums;
b) ein Zeitpunkt der Nutzung des Mediums;
c) eine Dauer der Nutzung des Mediums.

9. Verfahren nach einem der Ansprüche 2 bis 8, **dadurch gekennzeichnet, dass** mindestens zwei der folgenden im gleichen Zeitraum empfangenen Informationen
a) Dateninhalt des Identifizierungssignals;
b) weitere Informationen von den Eingabemitteln **(63);**
c) Umgebungsinformationen;
zusammen abgespeichert werden zur gleichzeitigen Bestimmung eines Orts und/ oder eines Zeitpunkts und/oder einer Dauer der Benutzung und/oder qualitativer Angaben zu den Einrichtungen oder Medien.

10. Verfahren nach einem der Ansprüche 1 bis 9, **dadurch gekennzeichnet, dass** das Personengerät **(7a-d; 41, 141)** ein elektromagnetisches Initiierungssignal mit einer dem typischen menschlichen Aufmerksamkeits- bzw. Wahrnehmungsbereich **(25)** entsprechenden Reichweite in vorgegebenen Zeitschritten aussendet

11. Verfahren nach Anspruch 10, **dadurch gekennzeichnet, dass** die Einrichtung **(1a-c)** oder das Personengerät **(7a-d; 41, 141)** durch ein Initiierungssignal zum Aussenden des Identifizierungssignals bzw. zu dessen Empfang initiiert wird.

12. Verfahren nach einem der Ansprüche 1 bis 11, **dadurch gekennzeichnet, dass** die im Gerätespeicher **(55; 155)** abzuspeichernden Daten zusammen mit einer Zeitinformation, wie einer Tageszeit und/oder einem Datum, abgespeichert werden und die Zeitinformation repetitiv im Minuten- bzw. Subminutenbereich mit einer Signaldauer im Sekunden- bzw. Subsekundenbereich erfolgt.

13. Anordnung zur Durchführung des Verfahrens nach einem der Ansprüche 1 bis 12 zur Ermittlung einer Akzeptanz von örtlich voneinander distanzierten Einrichtungen **(1a-c),** mit
a) einer an jeder Einrichtung (1a-c) angeordneten Sendereinheit (3a-c; 15), von der ein elektromagnetisches, diese Einrichtung (1a-c) identifizierendes Identifizierungssignal (5a-c) mit einem eine vorgegebene Reichweite (17a-c) definierenden Sendebereich aussendbar ist, und
b) mehreren von jeweils einer Person (6a-c; 24) tragbaren Personengeräten (7a-d; 41; 141) mit einem Empfänger (4a-d; 44; 144) für die Signale und mit einem Gerätespeicher (55; 155), in welchen über einen vorgegebenen Zeitraum Dateninhalte der abgestrahlten Signale (5a-c) abspeicherbar sind,
wobei
c) die Reichweite (17a-c) jeder Sendereinheit (3a-c; 15) einen jeweiligen Sendebereich (9a-c; 16) definiert, und der Sendebereich (9a-c; 16) und eine Empfangsempfindlichkeit des Empfängers (4a-d; 19a,b; 44; 144) derart aufeinander abgestimmt sind, dass kein Datenempfang mehr möglich ist, sofern sich die Einrichtung (1a-c) bezogen auf das Personengerät (7a-d; 41; 141) ausserhalb eines typischen menschlichen Aufmerksamkeits- bzw. Wahrnehmungsbereichs (25) befindet, und
d) jedes Personengerät **(41; 141)** einen Zeitgeber **(40; 151)** hat, um eine Datenmenge im Gerätespeicher **(55; 155)** zu reduzieren und/oder eine zeitliche Zuordnung vorzunehmen, und/oder zu ermitteln, wie oft und/oder wie lange die das Personengerät **(7a-d; 41;** 141) tragende Person **(6a-d; 24)** sich innerhalb des betreffenden Sendebereichs **(16)** einer der Einrichtungen **(1a-c)** aufgehalten hat,
**dadurch gekennzeichnet, dass**
e) der Zeitgeber **(40; 151)** in einer Taktfolge durch ein Einrichtungssignal zeitlich umschaltbar ausgebildet ist, so dass eine Taktfrequenz zum Empfangen und Abspeichern des Dateninhalts änderbar ist, um diese auf typische Verweildauern der das Personengerät **(7a-d; 41)** tragenden Person **(6a-d; 24)** im Sendebereich **(16)** der jeweiligen Einrichtung **(1a-c)** einzustellen.

14. Personengerät **(1a-c; 41; 141)** für eine Anordnung nach Anspruch 13, welches als Armbanduhrgehäuse ausgebildet ist, und zumindest folgende elektronische Elemente enthält:
a) wenigstens einen Empfänger **(44; 144)** für eine elektromagnetische Strahlung **(5a-c);**
b) einen Gerätespeicher **(55; 155)** zum Abspeichern von mit jedem Empfänger **(44; 144)** empfangbaren Datensätzen;
c) einen Zeitgeber **(40; 151),** um eine Datenmenge im Gerätespeicher **(55; 155)** zu reduzieren und/oder eine zeitliche Zuordnung vorzunehmen, und/oder zu ermitteln, wie oft und/oder wie lange eine das Personengerät **(7a-d; 41; 141)** tragende Person **(6a-d; 24)** sich innerhalb des betreffenden Sendebereichs **(16)** einer Einrichtung **(1a-c)** aufgehalten hat, sowie
d) eine Schnittstelle **(38)** zum Auslesen der abgespeicherten Datensätze,
wobei
e) der Zeitgeber **(40; 151)** in einer Taktfolge durch ein Einrichtungssignal zeitlich umschaltbar ausgebildet ist, so dass eine Taktfrequenz zum Empfangen und Abspeichern des Dateninhalts änderbar ist, um diese auf typische Verweildauern der das Personengerät **(7a-d; 41)** tragenden Person **(6a-d; 24)** im Sendebereich **(16)** einer jeweiligen Einrichtung **(1a-c)** einzustellen.

15. Personengerät **(1a-c; 41; 141)** nach Anspruch 14, **gekennzeichnet durch** eine synchronisierbare Zeitgebereinheit **(52; 151),** mit der in Zusammenarbeit mit dem Gerätespeicher **(55; 155)** empfangene Datensätze zeitsynchron abspeicherbar sind,

16. Personengerät (1a-c; 41; 141) nach Anspruch 15, **gekennzeichnet durch** eine Zeitanzeige **(45; 147),** welche mit der Zeitgebereinheit **(52; 151)** verbunden ist.

17. Personengerät nach einem der Ansprüche 14 bis 16, **gekennzeichnet durch** einen Tragsensor zur Ermittlung der Zeiten, zu denen das Personengerät nicht von einer Person getragen wird, umfassend insbesondere einen Temperatursensor **(157a)** und/oder einen Bewegungssensor **(157b).**

18. Personengerät nach einem der Ansprüche 14 bis 17, **gekennzeichnet durch** Eingabemittel **(63; 163; 190-193)** für das Einspeichern weiterer Informationen in den Gerätespeicher **(55; 155),** wobei das Einspeichern gleichzeitig und unabhängig vom Empfang des Dateninhalts des elektromagnetischen Identifizierungssignals erfolgen kann.

19. Personengerät nach Anspruch 18, **gekennzeichnet durch** ein Anzeigemittel **(47; 147),** auf dem Anweisungen für die das Personengerät **(41; 141)** tragende Person und/oder Informationen über einen aktuellen Status des Personengeräts (41; 141) darstellbar sind.

## Claims

1. A method of determining an acceptance of devices (1a-c), wherein an electromagnetic identification signal (5a-c) with a data content and with a transmission range defining a predetermined coverage (17a-c) is emitted by each device (1a-c), and the current data content is received and stored by a personal apparatus (7a-d; 41; 141) carried by a person (6a-d; 24), wherein the transmission range of the device (1a-c) and a receiving sensitivity of the personal apparatus (7a-d; 41; 141) are adapted to each other in such a way that no more data can be received if the device (1a-c) is located outside a typical human attention or perception zone (25) relative to the personal apparatus (7a-d; 41; 141) carried by the person (6a-d; 24), wherein, by means of a timer (40; 151) in the personal apparatus (41; 141), an amount of data in an apparatus memory (55; 155) is reduced and/or chronological assignment is carried out and/or it is determined how often and/or how long the person (6a-d; 24) carrying the personal apparatus (7a-d; 41; 141) has been located within the respective transmission range (16) of the device (1a-c), **characterised in that**, within the framework of the method, the timer (40; 151) is temporally switched over in a clock sequence by a device signal so that a clock frequency for receiving and storing the data content is changed in order to adjust the clock frequency to typical durations of the person (6a-d; 24) carrying the personal apparatus (7a-d; 41) within the transmission range (16) of the respective device (1a-c).

2. A method according to claim 1, **characterised in that** further information is stored in the apparatus memory (55; 155) by input means (63; 163, 190-194) on the personal apparatus (41; 141).

3. A method according to claim 2, **characterised in that** the storage by the input means (63; 163, 190-194) is carried out in accordance with the received data content of the identification signal (5a-c) from one of the devices (1a-c).

4. A method according to claim 2, **characterised in that** the storage by the input means (63; 163, 190-194) is independent of the reception of the data content of the electromagnetic identification signal (5a-c) from one of the devices (1a-c) and can take place simultaneously with the reception of the data content.

5. A method according to any one of claims 2 to 4, **characterised in that** at least one of the following pieces of information is recorded by the input means (63; 163, 190-194) on the personal apparatus (41; 141):
a) location of use of a medium;
b) time and/or a duration of use of the printed medium;
c) a qualitative indication of the use of the medium or of one of the devices.

6. A method according to any one of claims 1 to 5, **characterised in that**, in addition to data contents of identification signals transmitted by electromagnetic radiation, environmental information is also received and stored independently of the reception of the data contents of the identification signals, wherein the reception and storage of the environmental information can take place simultaneously with the reception of the data contents of the identification signals.

7. A method according to any one of claims 1 to 6, **characterised in that**
a) the signals from a plurality of devices (1a-c) within a spatial monitoring range and/or the environmental information during a period of time are stored in a processing centre (27) as a time-period device signal,
b) data contents of the identification signals or environmental information stored in each apparatus memory (55; 155) during the period of time are subsequently transmitted to the processing centre (27) and
c) are read out to form coincidences with the time-period device signals stored therein, and the detected coincidences are processed.

8. A method according to claim 7, **characterised in that** at least one of the following pieces of information is determined from the coincidences formed with the stored environmental information:
a) location of use of a medium;
b) time of use of the medium;
c) duration of use of the medium.

9. A method according to any one of claims 2 to 8, **characterised in that** at least two of the following pieces of information received during the same period of time,
a) data content of the identification signal,
b) further information from the input means (63),
c) environmental information,
are stored together for simultaneously determining a location and/or a time and/or a duration of use and/or qualitative indications relating to the devices or media.

10. A method according to any one of claims 1 to 9, **characterised in that** the personal apparatus (7a-d; 41, 141) emits at predetermined time intervals an electromagnetic initiation signal with a coverage corresponding to the typical human attention or perception zone (25).

11. A method according to claim 10, **characterised in that** the device (1a-c) or the personal apparatus (7a-d; 41, 141) is initiated by an initiation signal for emission of the identification signal or its reception.

12. A method according to any one of claims 1 to 11, **characterised in that** the data to be stored in the apparatus memory (55; 155) are stored together with a piece of time information, such as a time of day and/or a date, and the time information occurs repeatedly in the minute or subminute range with a signal duration in the second or subsecond range.

13. An arrangement for carrying out the method according to any one of claims 1 to 12 for determining an acceptance of locally spaced devices (1a-c), with
a) a transmitter unit (3a-c; 15) which is arranged on each device (1a-c) and which can emit an electromagnetic identification signal (5a-c) identifying this device (1a-c) and with a transmission range defining a predetermined coverage (17a-c), and
b) a plurality of personal apparatuses (7a-d; 41; 141) which can be carried by a respective person (6a-c; 24) and which are provided with a receiver (4a-d; 44; 144) for the signals and with an apparatus memory (55; 155) in which data contents of the emitted signals (5a-c) can be stored for a predetermined period of time,
wherein
c) the coverage (17a-c) of each transmitter unit (3a-c; 15) defines a respective transmission range (9a-c; 16), and the transmission range (9a-c; 16) and a receiving sensitivity of the receiver (4a-d; 91a, b; 44; 144) are adapted to each other in such a way that no more data can be received if the device (1a-c) is located outside a typical human attention or perception zone (25) relative to the personal apparatus (7a-d; 41; 141), and
d) each personal apparatus (41; 141) has a timer (40; 151) for reducing an amount of data in the apparatus memory (55; 155) and/or for carrying out chronological assignment and/or for determining how often and/or how long the person (6a-d; 24) carrying the personal apparatus (7a-d; 41; 141) has been located within the respective transmission range (16) of one of the devices (1a-c),
**characterised in that**
e) the timer (40; 151) can be temporally switched over in a clock sequence by a device signal so that a clock frequency for receiving and storing the data content can be changed in order to adjust the clock frequency to typical durations of the person (6a-d; 24) carrying the personal apparatus (7a-d; 41) within the transmission range (16) of the respective device (1a-c).

14. A personal apparatus (1a-c; 41; 141) for an arrangement according to claim 13, which apparatus is formed as a wristwatch casing and contains at least the following electronic components:
a) at least one receiver (44; 144) for electromagnetic radiation (5a-c);
b) an apparatus memory (55; 155) for storing data sets which are receivable by each receiver (44; 144);
c) a timer (40; 151) for reducing an amount of data in the apparatus memory (55; 155) and/or for carrying out chronological assignment and/or for determining how often and/or how long a person (6a-d; 24) carrying the personal apparatus (7a-d; 41; 141) has been located within the respective transmission range (16) of a device (1a-c), and
d) an interface (38) for reading out the stored data sets,
wherein
e) the timer (40; 151) can be temporally switched over in a clock sequence by a device signal so that a clock frequency for receiving and storing the data content can be changed in order to adjust the clock frequency to typical durations of the person (6a-d; 24) carrying the personal apparatus (7a-d; 41) within the transmission range (16) of a respective device (1a-c).

15. A personal apparatus (1a-c; 41; 141) according to claim 14, **characterised by** a synchronisable timer unit (52; 151) with which data sets received in co-operation with the apparatus memory (55; 155) are time-synchronously storable.

16. A personal apparatus (1a-c; 41; 141) according to claim 15, **characterised by** a time display (45; 147) which is connected to the timer unit (52; 151).

17. A personal apparatus according to any one of claims 14 to 16, **characterised by** a carrier sensor for determining the times at which the personal apparatus is not carried by a person, in particular comprising a temperature sensor (157a) and/or a movement sensor (157b).

18. A personal apparatus according to any one of claims 14 to 17, **characterised by** input means (63; 163; 190-193) for storing further information in the apparatus memory (55; 155), wherein storage can take place simultaneously with and independently of the reception of the data content of the electromagnetic identification signal.

19. A personal apparatus according to claim 18, **characterised by** a display means (47; 147) on which instructions for the person carrying the personal apparatus (41; 141) and/or information relating to the current status of the personal apparatus (41; 141) can be displayed.

## Revendications

1. Procédé de détermination d'une réception de dispositifs (1a-c), sachant qu'un signal d'identification électromagnétique (5a-c) avec un contenu de données et avec une zone d'envoi définissant une portée fixée (17a-c) est envoyé par chaque dispositif (1a-c) et que le contenu de données momentané est reçu et stocké par un appareil personnel (7a-d ; 41 ; 141) porté par une personne (6a-d ; 24), sachant que la zone d'envoi du dispositif (1a-c) conjointement avec une sensibilité de réception de l'appareil personnel (7a-d ; 41 ; 141) concordent l'une avec l'autre, de sorte que plus aucune réception de données ne soit possible si, par rapport à l'appareil personnel (7a-d ; 41 ; 141) porté par la personne (6a-d ; 24), le dispositif (1a-c) se trouve en dehors d'une zone d'attention ou de perception humaine typique (25), sachant que, dans l'appareil personnel (41 ; 141), au moyen d'un temporisateur (40 ; 151), une quantité de données est comprimée dans une mémoire d'appareil (55 ; 155) et/ou une association chronologique est réalisée et/ou il est déterminé à quelle fréquence et/ou combien de temps la personne (6a-d ; 24) portant l'appareil personnel (7a-d ; 41 ; 141) est restée dans la zone d'envoi (16) respective du dispositif (1a-c), **caractérisé en ce que**, dans le cadre du procédé, le temporisateur (40 ; 151) est commuté chronologiquement par un signal du dispositif en une succession d'impulsions, de sorte qu'une fréquence d'horloge soit modifiée pour la réception et le stockage du contenu de données, afin d'ajuster celle-ci sur la durée de présence typique de la personne (6a-d ; 24) portant l'appareil personnel (7a-d ; 41) dans la zone d'envoi (16) du dispositif (1a-c) respectif.

2. Procédé selon la revendication 1, **caractérisé en ce que**, dans la mémoire d'appareil (55 ; 155), des informations complémentaires sont stockées à l'aide de moyens d'entrée (63 ; 163, 190-194) au niveau de l'appareil personnel (41 ; 141).

3. Procédé selon la revendication 2, **caractérisé en ce que** le stockage à l'aide des moyens d'entrée (63 ; 163, 190-194) est réalisé conformément au contenu de données du signal d'identification (5a-c) de l'un des dispositifs (1a-c).

4. Procédé selon la revendication 2, **caractérisé en ce que** le stockage à l'aide des moyens d'entrée (63 ; 163, 190-194) est indépendant de la réception du contenu de données du signal d'identification électromagnétique (5a-c) de l'un des dispositifs (1a-c) et peut en même temps être réalisé avec la réception du contenu de données.

5. Procédé selon l'une quelconque des revendications 2 à 4, **caractérisé en ce qu'**au moins l'une des informations suivantes est enregistrée par les moyens d'entrée (63 ; 163, 190-194) au niveau de l'appareil personnel (41 ; 141) :
a) un lieu de l'utilisation d'un moyen ;
b) une date et/ou une durée de l'utilisation du moyen imprimé ;
c) une donnée qualitative concernant l'utilisation du moyen ou de l'un des dispositifs.

6. Procédé selon l'une quelconque des revendications 1 à 5, **caractérisé en ce que**, mis à part des contenus de données transmis avec un rayonnement électromagnétique par des signaux d'identification, des informations environnantes sont également réceptionnées et stockées, indépendamment de la réception des contenus de données des signaux d'identification, sachant que la réception et le stockage des informations environnantes peuvent en même temps être réalisés avec la réception des contenus de données des signaux d'identification.

7. Procédé selon l'une quelconque des revendications 1 à 6, **caractérisé en ce que**
a) les signaux de plusieurs dispositifs (1a-c) à partir d'une zone de surveillance spatiale et/ou les informations environnantes sont stockés pendant une période dans une centrale (27) en tant que signal de dispositif périodique ;
b) dans chaque mémoire d'appareil (55 ; 155), des contenus de données des signaux d'identification ou des informations environnantes stockés sur la période sont transmis ultérieurement à la centrale (27) ; et
c) sont lus pour la formation de coïncidences avec les signaux de dispositif périodiques stockés ici et les coïncidences déterminées sont traitées.

8. Procédé selon la revendication 7, **caractérisé en ce que**, à partir de la formation de coïncidences avec les informations environnantes stockées, au moins l'une des informations suivantes est déterminée :
a) un lieu de l'utilisation d'un moyen ;
b) une date de l'utilisation du moyen ;
c) une durée de l'utilisation du moyen.

9. Procédé selon l'une quelconque des revendications 2 à 8, **caractérisé en ce qu'**au moins deux des informations suivantes reçues dans la même période
a) contenu de données du signal d'identification ;
b) informations complémentaires par les moyens d'entrée (63)
c) informations environnantes ;
sont stockées conjointement pour la détermination simultanée d'un lieu et/ou d'une date et/ou d'une durée d'utilisation et/ou de données qualitatives par rapport aux dispositifs ou aux moyens.

10. Procédé selon l'une quelconque des revendications 1 à 9, **caractérisé en ce que** l'appareil personnel (7a-d ; 41 ; 141) envoie à des intervalles de temps définis un signal d'amorçage électromagnétique avec une portée correspondant à la zone d'attention ou de perception humaine typique (25).

11. Procédé selon la revendication 10, **caractérisé en ce que** le dispositif (1a-c) ou l'appareil personnel (7a-d ; 41 ; 141) est amorcé par un signal d'amorçage pour l'envoi du signal d'identification ou pour sa réception.

12. Procédé selon l'une quelconque des revendications 1 à 11, **caractérisé en ce que** les données à stocker dans la mémoire d'appareil (55 ; 155) sont stockées conjointement avec une information temporelle, comme une heure du jour et/ou une date et l'information temporelle est produite de manière répétitive en minutes ou sous-minutes avec une durée de signal en secondes ou sous-secondes.

13. Dispositif permettant de réaliser le procédé selon l'une quelconque des revendications 1 à 12 pour la détermination d'une réception de dispositifs (1a-c) placés à distance l'un de l'autre localement, avec
a) une unité d'envoi (3a-c ; 15) disposée au niveau de chaque dispositif (1a-c), de laquelle un signal d'identification (5a-c) électromagnétique identifiant ce dispositif (1a-c) peut être envoyé avec une zone d'envoi définissant une portée fixée (17a-c), et
b) plusieurs appareils personnels (7a-d ; 41 ; 141) pouvant respectivement être portés par une personne (6a-c ; 24) avec un récepteur (4a-d ; 44 ; 144) pour les signaux et avec une mémoire d'appareil (55 ; 155), dans laquelle des contenus de données des signaux émis (5a-c) peuvent être stockés sur une période de temps définie, sachant que
c) la portée (17a-c) de chaque unité d'envoi (3a-c ; 15) définit une zone d'envoi (9a-c ; 16) respective, et la zone d'envoi (9a-c ; 16) et une sensibilité de réception du récepteur (4a-d ; 19a, b ; 44 ; 144) concordent l'une avec l'autre, de manière à ce que plus aucune réception de données ne soit possible si, par rapport à l'appareil personnel (7a-d ; 41 ; 141), le dispositif (1a-c) se trouve en dehors d'une zone (25) d'attention ou de perception humaine typique, et
d) chaque appareil personnel (41 ; 141) possède un temporisateur (40 ; 151) pour comprimer une quantité de données dans la mémoire d'appareil (55 ; 155) et/ou réaliser une association chronologique et/ou déterminer à quelle fréquence et/ou combien de temps la personne (6a-d ; 24) portant l'appareil personnel (7a-d ; 41 ; 141) est restée dans la zone d'envoi (16) respective de l'un des dispositifs (1a-c),
**caractérisé en ce que**
e) le temporisateur (40; 151) est conçu pour pouvoir être commuté chronologiquement par un signal de dispositif en une succession d'impulsions, de sorte qu'une fréquence d'horloge puisse être modifiée pour la réception et le stockage du contenu de données, afin d'ajuster celle-ci sur la durée de présence typique de la personne (6a-d ; 24) portant l'appareil personnel (7a-d ; 41) dans la zone d'envoi (16) du dispositif (1a-c) respectif.

14. Appareil personnel (1a-c ; 41 ; 141) pour un dispositif selon la revendication 13, lequel est réalisé comme un boîtier de montre-bracelet et comporte au moins les éléments électroniques suivants :
a) au moins un récepteur (44 ; 144) pour un rayonnement électromagnétique (5a-c) ;
b) une mémoire d'appareil (55 ; 155) pour stocker des ensembles de données pouvant être reçus au moyen de chaque récepteur (44 ; 144) ;
c) un temporisateur (40 ; 151) pour comprimer une quantité de données dans la mémoire d'appareil (55 ; 155) et/ou réaliser une association chronologique et/ou déterminer à quelle fréquence et/ou combien de temps la personne (6a-d ; 24) portant l'appareil personnel (7a-d ; 41 ; 141) est restée dans la zone d'envoi (16) respective d'un dispositif (1a-c), ainsi que
d) une interface (38) pour lire les ensembles de données stockés, sachant que
e) le temporisateur (40; 151) est conçu pour pouvoir être commuté chronologiquement par un signal de dispositif en une succession d'impulsions, de sorte qu'une fréquence d'horloge puisse être modifiée pour la réception et le stockage du contenu de données, afin d'ajuster celle-ci sur la durée de présence typique de la personne (6a-d ; 24) portant l'appareil personnel (7a-d ; 41) dans la zone d'envoi (16) du dispositif (1a-c) respectif.

15. Appareil personnel (1a-c;41 ; 141) selon la revendication 14, **caractérisé par** une unité de temporisateur (52 ; 151) pouvant être synchronisée, avec laquelle des ensembles de données reçus peuvent être stockés de manière synchronisée dans le temps en collaboration avec la mémoire d'appareil (55, 155).

16. Appareil personnel (1a-c ; 41 ; 141) selon la revendication 15, **caractérisé par** un affichage du temps (45 ; 147), lequel est relié à l'unité de temporisateur (52 ; 151).

17. Appareil personnel selon l'une quelconque des revendications 14 à 16, **caractérisé par** un capteur de porteur permettant de déterminer les moments auxquels l'appareil personnel n'est pas porté par une personne, et comprenant notamment un capteur de température (157a) et/ou un capteur de mouvement (157b).

18. Appareil personnel selon l'une quelconque des revendications 14 à 17, **caractérisé par** des moyens d'entrée (63 ; 163, 190-193) pour le stockage d'informations complémentaires dans la mémoire d'appareil (55 ; 155), sachant que le stockage peut être réalisé en même temps et indépendamment de la réception du contenu de données du signal d'identification électromagnétique.

19. Appareil personnel selon la revendication 18, **caractérisé par** un moyen d'affichage (47 ; 147), sur lequel des instructions pour la personne portant l'appareil personnel (41 ; 141) et/ou des informations d'un statut actualisé de l'appareil personnel (41 ; 141) peuvent être indiquées.
